(19) Europäisches Patentamt / European Patent Office / Office européen des brevets

(11) **EP 2 199 127 A2**

(12) **EUROPEAN PATENT APPLICATION**

(43) Date of publication:
**23.06.2010 Bulletin 2010/25**

(51) Int Cl.:
*B60J 3/06* (2006.01)  *G02B 5/30* (2006.01)
*B29C 55/00* (2006.01)  *B32B 27/30* (2006.01)

(21) Application number: **09015717.3**

(22) Date of filing: **18.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **19.12.2008 JP 2008324769**

(71) Applicant: **Fujifilm Corporation Tokyo 106-8620 (JP)**

(72) Inventors:
• **Matsunami, Yuki**
  **Ashigarakami-gun**
  **Kanagawa (JP)**

• **Katagiri, Kensuke**
  **Ashigarakami-gun**
  **Kanagawa (JP)**
• **Kamada, Koh**
  **Ashigarakami-gun**
  **Kanagawa (JP)**

(74) Representative: **HOFFMANN EITLE Patent- und Rechtsanwälte Arabellastrasse 4 81925 München (DE)**

(54) **Polarizing film, method for producing polarizing film, polarizing plate, method for producing polarizing plate, and anti-glare vehicular film**

(57) The present invention provides a polarizing film which contains at least dichroic anisotropic metal nanoparticles and a thermoplastic resin, wherein the polarizing film has a thickness of 12.5 μm or less.

## FIG. 6 A

EP 2 199 127 A2

# FIG. 6 B

**Description**

BACKGROUND OF THE INVENTION

Field of the Invention

The present invention relates to a polarizing film, a method for producing a polarizing film, a polarizing plate, a method for producing a polarizing plate, and an anti-glare vehicular film.

Description of the Related Art

As a production method of a polarizing plate, there has been known a method for producing a polarizing plate using a substance such as iodine and an organic dye. In the production method, a Vinylon film (approximately 75 $\mu$m in thickness) is dyed with iodine or an organic dye while being uniaxially stretched between rolls in water, further, PVA (polyvinyl alcohol) is subjected to a film curing treatment with boric acid or the like to produce a polarizing film, and generally, the polarizing film is sandwiched in between TAC (triacetylcellulose) base materials, using PVA paste.
In this method, however, a problem arises in that since the thickness of a polarizing film produced is thick, the film is subjected to a large shrinkage stress, resulting in easy occurrence of curling.
In order to solve such a problem, there have been proposed methods for producing a thin-film polarizing plate using a substance of iodine or an organic dye, in which a PVA layer is formed on a thermoplastic resin substrate, the resulting film is uniaxially or successively biaxially stretched, dyed with iodine or an organic dye, and then laminated on a TAC base or the like via an adhesive (refer to Japanese Patent Application Laid-Open (JP-A) Nos. 2001-343522, 2003-43257, 2001-343521, and 2000-338329; and Japanese Patent Application Publication (JP-B) No. 08-12296).
For example, JP-A No. 2001-343522 describes that the thickness of a polarizing film after being subjected to stretching, which is calculated by multiplying the film thickness of the polarizing film before subjected to stretching d ($\mu$m) by a draw ratio e, is made thinner than 30 ($\mu$m).
JP-B No. 08-12296 describes to produce an orientation space in which a surface of a thermoplastic substrate can be coated with a PVA layer (6.4 $\mu$m to 76.2 $\mu$m in thickness), stretched and then dyed.
JP-A No. 2003-43257 describes that a PVA layer is uniaxially stretched in a lateral direction so as to have a thickness of 10 $\mu$m or less at a draw ratio of 4 times to 8 times, dyed, and further shrunk by 2% or more in a perpendicular direction (the second stretching may be performed after the lateral uniaxial stretching or during the lateral uniaxial stretching.).
JP-A No. 2001-343521 discloses a polarizing film which has a protective film (TAC film or cyclic polyolefin film) on at least one surface thereof, contains PVA as a main component, and has a thickness of 10 $\mu$m or less.
Also, JP-A No. 2000-338329 discloses a polarizing film having a thickness of 2 $\mu$m to 15 $\mu$m, which is obtained as follows: a PVA layer (6 $\mu$m to 30 $\mu$m in thickness; when the thickness thereof is 6 $\mu$m or less, it is difficult to perform stretching) is uniaxially stretched in a state where the PVA layer is attached onto a thermoplastic resin sheet or the PVA layer is sandwiched in between two thermoplastic resin sheets, the resulting layer is laminated over another base material via an adhesive, peeled off from the base material and then dyed; and also discloses a polarizing plate which is suitably provided with a hard coat layer, an anti-glare layer, a reflection preventing layer or the like.
According to these methods for producing a polarizing plate, curling of a resulting polarizing film can be suppressed so as to be small, and the polarizing film has strong resistance to bending.
Besides the above-mentioned, a polarizing plate is also known in which a polarization layer having a thickness of 20 nm to 1,500 nm (planar layer of dye: phthalocyanine, etc., and also including optically variable ink) is applied on a surface of an amorphous polyolefine resin film (in particular, norbornene resin) (refer to JP-A No. 2002-228837).
Since iodine and organic dyes for use in the above-mentioned methods have low heat resistance, there have been proposed methods for producing a polarizing film using metal nanorods, in which metal nanorods exhibiting dichroic effects (silver, gold) are dispersed in PVA to produce a casting film, and a single layer of the casting film is stretched to be oriented, thereby producing a polarizing film (refer to Adv. Mater. 2002, 14 (13), pp. 1000-1004, and Adv Func. Mater. 2005, 75, pp. 1065-1071).
It is conceivable that the use of these methods makes it possible to obtain high durability of a resulting polarizing film, however, they have a problem in that metal nanorods in the resulting polarizing film have a low orientation degree (0.8 or lower). Also, the shrinkage stress is presumed to be large because the thickness of the polarizing film is thick.
In order to solve this problem, methods for producing a thin polarizing film using metal nanorods are also proposed (refer to JP-A Nos. 2006-184624, and 2006-312681). These methods can produce a metal-nanorod polarizer which includes a matrix polymer having a heat resistance of 150°C or higher, and in which an amic acid and silver nitrate are used to form a film, and the film is stretched under application of heat to thereby simultaneously perform a polyimidization reaction and formation of metal nanorods, making it possible to obtain a polarizing film having a thin thickness and a high orientation degree (0.9 or lower).

The use of these methods makes it possible to obtain high durability of a polarizing film, however, these methods have problems in that it is difficult to increase the surface area of a polarizing plate using the polarizing film because the film is heated at high temperature during the process of polymerization and stretching, and it is impossible to adjust the optical density and the color tint.

Accordingly, there has not yet been provided a satisfactory polarizing film which has excellent durability and excellent orientation properties and a small shrinkage stress and is capable of producing a polarizing plate with a large surface area.

BRIEF SUMMARY OF THE INVENTION

The present invention is accomplished to solve the above-mentioned conventional problems and to achieve the following objects. The objects of the present invention are to provide a polarizing film which has excellent durability and excellent orientation properties and a small shrinkage stress and is capable of producing a polarizing plate with a large surface area; a method for producing a polarizing film; a polarizing plate; a method for producing a polarizing plate; and related techniques using them

As a result of carrying out extensive studies and examinations in an attempt to solve the aforesaid problems, the present inventors have found the following facts (1) and (2):

(1) Studies on molecules improving orientation properties of dichroic metal nanoparticles (metal nanorods) by making a composition layer thinner, submicron-order rod-shape particles and whisker materials have been progressing, and findings on molecular orderliness and orientation control have been obtained. As to orientation control of molecules, besides studies on stretching/orientation of iodine and organic dyes, for example, studies on molecular orderliness of liquid crystal materials, surfactants, metal complexes, J aggregates and the like are under way. As to submicron-order rod-shape particles and whisker materials, studies, for example, on flow orientation, rolling, electro spinning, magnetic field, and orientation of electric field are under way.

However, there are a few findings on orientation control of mezzo-scale metal nanoparticles, and there was just a report of stretching and orienting a PVA film or the like which contains nanorod particles.

In light of this situation, as a result of carrying out extensive studies and examinations, the present inventors have found that as a matrix polymer film is made thinner, the orientation properties of dichroic metal nanoparticles (metal nanorods) are improved and thus it is possible to increase the degree of orientation of the dichroic metal nanoparticles (metal nanorods) with a small drawing ratio.

(2) Dimensional change of polarizing film

Since a polarizing film is a stretched film, the shrinkage stress is high and it has a problem in that when it is heated, it shrinks in the stretched direction to cause a large dimensional change. A polarizing film also has a problem in that curling is inconveniently caused because of its high shrinkage stress even when the polarizing film is used in a state of being attached onto a protective film such as TAC.

In particular, the problem with the dimensional change of a polarizing film when being heated is serious. For instance, when a laminated glass is produced using a fourfold, longitudinally, uniaxially stretched film which is used with a Vinylon film (75 $\mu$m in thickness, VF-P#7500, produced by Kuraray Co., Ltd.) and the laminated glass is heated to 130°C, the stretched film is shrunk. When the resulting laminated glass is observed, a phenomenon is detected in which the stretched film is shrunk approximately 20% in the stretching direction.

As a result of carrying out extensive studies and examinations in an attempt to solve the aforesaid problems, the present inventors have found that it is possible to reduce the dimensional change of a polarizing film by making the polarizing film thinner, even when the polarizing film undergoes glass laminating process.

The present invention is based on the findings by the present inventors, and the following are means for solving the aforementioned problems.

< 1 > A polarizing film containing at least:

dichroic anisotropic metal nanoparticles, and
a thermoplastic resin,

wherein the polarizing film has a thickness of 12.5 $\mu$m or less.

< 2 > The polarizing film according to < 1 >, wherein the dichroic anisotropic metal nanoparticles have a degree of orientation higher than 0.85.

< 3 > The polarizing film according to one of < 1 > and < 2 >, wherein the dichroic anisotropic metal nanoparticles have a equivalent-volume-sphere radius of 15 nm or less and an aspect ratio of 1.1 to 10.

< 4 > The polarizing film according to any one of < 1 > to < 3 >, wherein a metal used in the dichroic anisotropic metal nanoparticles contains at least one of silver, gold, copper, aluminum, platinum, palladium, and nickel.

< 5 > The polarizing film according to any one of < 1 > to < 4 >, wherein the dichroic anisotropic metal nanoparticles have a core-shell structure in which a surface of a core metal is coated with a shell metal.

< 6 > The polarizing film according to < 5 >, wherein the core metal is gold, and the shell metal is silver.

< 7 > The polarizing film according to any one of < 1 > to < 6 >, wherein the thermoplastic resin is polyvinyl alcohol.

< 8 > A method for producing a polarizing film, the method including at least:

forming a composition layer containing at least dichroic anisotropic metal nanoparticles and a thermoplastic resin on a surface of a stretchable substrate, and

stretching the composition layer together with the stretchable substrate to form a polarizing film on the surface of the stretchable substrate,

wherein the composition layer has a thickness of 25 $\mu$m or less, and the polarizing film after being subjected to the stretching is 12.5 $\mu$m or less.

< 9 > The method according to < 8 >, wherein the composition layer has a thickness of 10 $\mu$m or less.

< 10 > The method according to one of < 8 > and < 9 >, wherein the stretchable substrate is unstretched polyethylene terephthalate.

< 11 > A polarizing plate including:

the polarizing film according to any one of < 1 > to < 7 >.

< 12 > The polarizing plate according to < 11 >, wherein a base material is provided on each of a first surface of the polarizing film and a second surface thereof opposing the first surface.

< 13 > The polarizing plate according to < 12 >, wherein the base material provided on at least the first surface of the polarizing film is a triacetylcellulose film.

< 14 > The polarizing plate according to < 11 >, wherein a first base material and a second base material are provided in this order on each of first and second surfaces of the polarizing film, the second surface opposing the first surface.

< 15 > The polarizing plate according to < 14 >, wherein the first base material is an intermediate layer containing polyvinyl butyral and a polyethylene-vinyl acetate copolymer, and the second base material is a glass substrate.

< 16 > A method for producing a polarizing plate, the method including at least:

laminating a base material on a surface of a polarizing film opposing a surface provided with a stretchable substrate, and peeling off the stretchable substrate from the surface of the polarizing film, the surface having being provided with the stretchable substrate,

wherein the polarizing film is obtained by the method for producing a polarizing film, according to any one of < 8 > to < 10 >.

< 17 > The method according to < 16 >, further including: providing a base material on the surface of the polarizing film opposing the surface having been provided with the base material, so as to form a laminate in which the base material is provided on both the surfaces of the polarizing film.

< 18 > An antiglare vehicular film including:

the polarizing film according to any one of < 1 > to < 7 >.

The present invention can solve the conventional problems described above and achieve the above mentioned objects. Specifically, according to the present invention, it is possible to provide a polarizing film which has excellent durability and excellent orientation properties and a small shrinkage stress and is capable of producing a polarizing plate with a large surface area; a method for producing a polarizing film; a polarizing plate; a method for producing a polarizing plate; and related techniques using them. Also, according to the present invention, it is possible to provide a polarizing film which enables easy adjustment of the optical density and the color tint and is flexible and can be laminated on various types of substrates, a method for producing a polarizing film, a polarizing plate, a method for producing a polarizing plate, and related techniques using them.

BRIEF DESCRIPTION OF THE DRAWINGS

FIG. 1 is a schematic diagram exemplarily showing a structure of a dichroic anisotropic metal nanoparticle in the present invention.

FIG. 2 is a schematic diagram exemplarily showing a core nanorod in a dichroic anisotropic metal nanoparticle in the present invention.

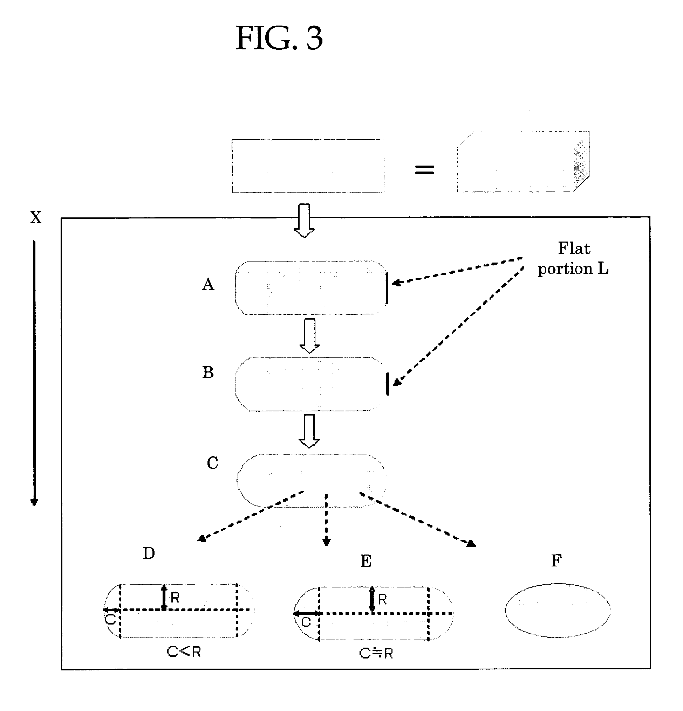

FIG. 3 shows projection images of nanorods obtained through TEM, wherein one of the projection images is that of a cuboid nanorod (single crystal) and the others are those of nanorods whose end surfaces are rounded (without corners) of the present invention; i.e., nanorods A to F, wherein nanorods A and B have polyhedral end surfaces (caps), nanorod C has spherical or ellipsoidal end surfaces (caps), nanorod D has ellipsoidal end surfaces (caps), nanorod E has spherical end surfaces (caps), and nanorod F has an ellipsoidal shape, wherein arrow X indicates that the end surfaces are gradually rounded in the order of the cuboid nanorod, nanorod A, nanorod B and nanorod C, and wherein when a flat portion L of the end surface (cap) of a nanorod is equal to or greater than 2 nm, the shape of the nanorod is approximated to be generally cuboid; and when a flat portion L of the end surface (cap) of a nanorod is smaller than 2 nm, the shape of the nanorod is approximated to be generally cylindrical.

FIG. 4A is used for describing a method in which whether or not end surfaces (caps) of a nanorod are rounded (without corners) is determined, and is an exemplary view of a shape of a nanorod observed through TEM, whose end surfaces are determined not to be rounded (with corners) based on that the length (L) of a portion of each end surface of the nanorod, the portion being in contact with a perpendicular line to a major axis thereof, is greater than 0.9B.

FIG. 4B is used for describing a method in which whether or not end surfaces (caps) of a nanorod are rounded (without corners) is determined, and is one exemplary view of a shape of a nanorod observed through TEM, whose end surfaces are determined to be rounded (without corners) based on that the length (L) of a portion of each end surface of the nanorod, the portion being in contact with a perpendicular line to a major axis thereof, is equal to or smaller than 0.9B.

FIG. 4C is used for describing a method in which whether or not end surfaces (caps) of a nanorod are rounded (without corners) is determined, and is another exemplary view of a shape of a nanorod observed through TEM, whose end surfaces are determined to be rounded (without corners) based on that the length (L) of a portion of each end surface of the nanorod, the portion being in contact with a perpendicular line to a major axis thereof, is equal to or smaller than 0.9B.

FIG. 5A is a diagram showing a specific example of a dichroic anisotropic metal nanoparticle having end surfaces.

FIG. 5B is a diagram showing a specific example of a dichroic anisotropic metal nanoparticle having end surfaces.

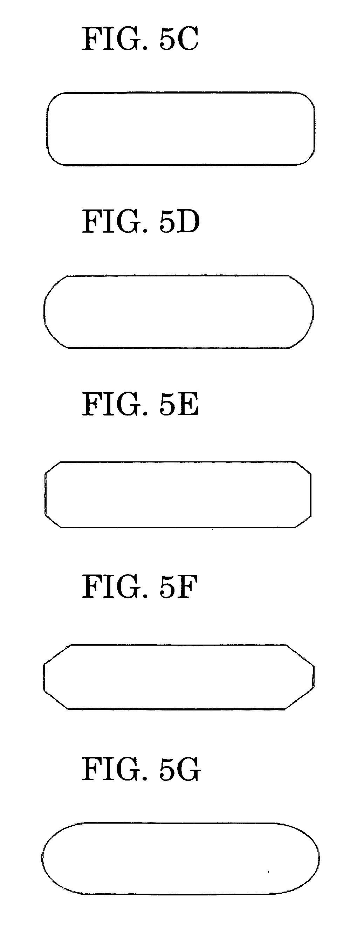

FIG. 5C is a diagram showing a specific example of a dichroic anisotropic metal nanoparticle having end surfaces.

FIG. 5D is a diagram showing a specific example of a dichroic anisotropic metal nanoparticle having end surfaces.

FIG. 5E is a diagram showing a specific example of a dichroic anisotropic metal nanoparticle having end surfaces.

FIG. 5F is a diagram showing a specific example of a dichroic anisotropic metal nanoparticle having end surfaces.

FIG. 5G is a diagram showing a specific example of a dichroic anisotropic metal nanoparticle having end surfaces.

FIG. 5H is a diagram showing a specific example of a dichroic anisotropic metal nanoparticle having end surfaces.

FIG. 6A is a schematic diagram exemplarily showing a production process of a polarizing plate according to the present invention.

FIG. 6B is a schematic diagram exemplarily showing another production process of a polarizing plate according to the present invention.

FIG. 6C is a schematic diagram exemplarily showing still another production process of a polarizing plate according to the present invention.

FIG. 6D is a schematic diagram exemplarily showing still yet another production process of a polarizing plate according to the present invention.

FIG. 6E is a schematic diagram exemplarily showing still yet another production process of a polarizing plate according to the present invention.

FIG. 6F is a schematic diagram exemplarily showing still yet another production process of a polarizing plate according to the present invention.

FIG. 7A is a schematic diagram exemplarily showing a production process of a polarizing plate according to the present invention.

FIG. 7B is a schematic diagram exemplarily showing another production process of a polarizing plate according to the present invention.

FIG. 7C is a schematic diagram exemplarily showing still another production process of a polarizing plate according to the present invention.

FIG. 7D is a schematic diagram exemplarily showing still yet another production process of a polarizing plate according to the present invention.

FIG. 8 is a schematic diagram exemplarily showing a layer configuration of a polarizing plate according to the present invention.

FIG. 9 is a schematic diagram exemplarily showing another layer configuration of a polarizing plate according to the present invention.

FIG. 10 is a diagram illustrating the principle of glare reduction in the case where an antiglare vehicular window of the present invention is used in an automobile.

FIG. 11 is a diagram showing one example of the case where a polarizing film is provided, as an intermediate layer, in a laminated glass.

FIG. 12 is a diagram showing one example of the case where a polarizing plate is provided on one surface side of a laminated glass.

FIG. 13 is a graph showing reflectance behavior in the case where a first medium having a refractive index of 1 is incident into a second medium having a refractive index of 1.46.

FIG. 14 is a transmission electron microscope (TEM) image of metal nanorods synthesized in Example 1.

FIG. 15 is a graph of absorption spectrum of dichroic anisotropic metal nanoparticles synthesized in Example 1.

FIG. 16 is a transmission electron microscope (TEM) image of dichroic anisotropic metal nanoparticles synthesized in Example 1.

FIG. 17 is a graph in relation to polarizability of the polarizing plate produced in Example 1.

FIG. 18 is a diagram showing a method of measuring a curling amount.

DETAILED DESCRIPTION OF THE INVENTION

(Polarizing Film)

A polarizing film according to the present invention includes at least dichroic anisotropic metal nanoparticles and a thermoplastic resin and has a thickness of 12.5 $\mu$m or less.

The upper limit of thickness of the polarizing film is not particularly limited, provided that it is 12.5 $\mu$m or less, and may be suitably adjusted according to the intended use. However, from the viewpoint of orientation properties of the dichroic anisotropic metal nanoparticles, it is preferably 10 $\mu$m or less, more preferably 8 $\mu$m or less.

The lower limit of thickness of the polarizing film is not particularly limited and may be suitably adjusted according to the intended use. However, from the viewpoint of the strength of the polarizing film, it is preferably 0.5 $\mu$m or more.

The degree of orientation of the polarizing film is not particularly limited and may be suitably adjusted in accordance with the intended use. However, it is preferably higher than 0.85, more preferably higher than 0.9, and particularly preferably 1.

When the polarizing film has a degree of orientation higher than 0.85, it is favorable in terms of improving the polarization performance.

- Dichroic Anisotropic Metal Nanoparticles -

The dichroic anisotropic metal nanoparticles are not particularly limited and may be suitably selected in accordance with the intended use. For example, there may be exemplified metal nanoparticles called "metal nanorods". The metal nanorods are rod-shaped particles whose major axes are longer than their minor axes, and as disclosed in "Adv Mater. 2002, 14 (13), pp. 1000-1004", "Adv. Func. Mater. 2005, 75, pp. 1065-1071", and JP-ANo. 2006-184624, metal nanorods, such as silver nanorods, gold nanorods, copper nanorods, and aluminum nanorods, exhibit different surface plasmon resonances between their minor axes and their major axes, and therefore, they exhibit dichroism property from ultraviolet region to near-infrared region. Materials containing any of these metal nanorods whose major axes are oriented in a direction exhibit dichroism property

Since such dichroic materials containing metal nanorods are inorganic materials, they have strong resistance to heat and light, and a polarizing plate using such a dichroic material has higher durability than a conventional polarizing plate using iodine and an organic dye. For example, a glass polarizer in which silver nanorods are oriented in a glass matrix, and POLACORE (produced by Corning Co., Inc.) are utilized in optical communication fields requiring high durability.

As metals for use in the metal nanorods, silver, gold, copper, aluminum, platinum, palladium, and nickel are preferred.

The metal nanorods are preferably composite metal nanorods, i.e., core shell structures in which surfaces of core nanorods are coated with shells.

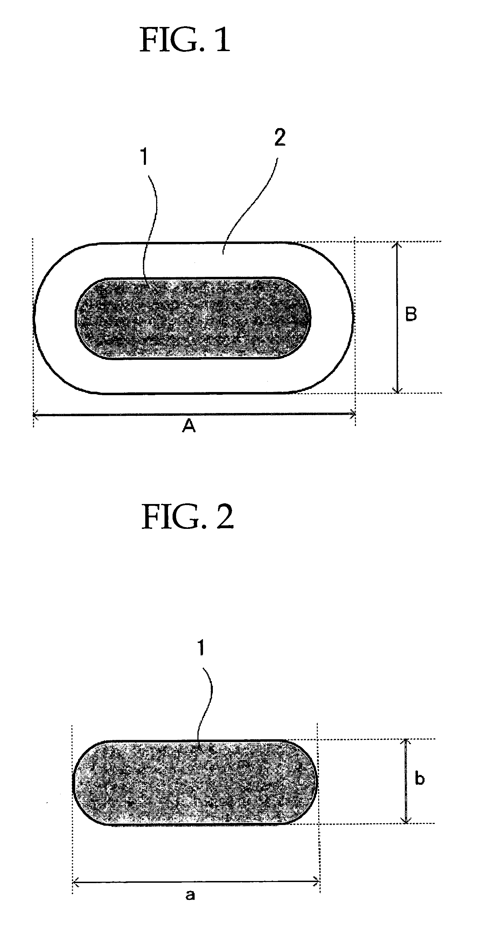

The composite metal nanorods have, as shown in FIG. 1, a core-shell structure where a core nanorod 1 is coated with a shell 2. The aspect ratio of the composite metal nanorod shown in FIG. 1 is determined from a value (A/B) which is obtained by dividing the length of the major axis A (hereinbelow, otherwise referred to "long diameter") by the length of minor axis B (hereinbelow, otherwise referred to "short diameter").

The aspect ratio of the composite metal nanorods means an average value of aspect ratios of 200 particles arbitrarily selected from the metal nanoparticles observed by a transmission electron microscope (TEM).

The aspect ratio of the composite metal nanorods is preferably 1.1 to 10, more preferably 1.1 to 5, from the viewpoint of increasing the absorption in the visible light region.

When the aspect ratio is less than 1.1, adequate dichroism property may not be obtained, and when it is more than 10, light absorption may not be obtained from the desired visible region to the near-infrared region.

The equivalent-volume-sphere radius (R) of the composite metal nanorod is preferably 15 nm or smaller, more preferably 13 nm or smaller from the viewpoint of reduction of light scattering. The composite metal nanorod having an equivalent-volume-sphere radius (R) larger than 15 nm scatters light to a considerable extent, and thus a dispersion of the composite metal nanorod and a composition containing it may degrade in transparency.

Here, the equivalent-volume-sphere radius (R) is a radius of a sphere whose volume is the same as that of the composite metal nanorod, and is calculated, depending on the shape of the composite metal nanorod, based on the following equations.

When the shape of the composite metal nanorod is generally cylindrical, the following equation is employed:

$$R = \sqrt[3]{3 \times A \times B \times B / 16}$$

where A denotes a major axis length of the composite metal nanorod, the length is obtained by measuring a length of the longest straight line between both ends of the composite metal nanorod; and B denotes a minor axis length of the composite metal nanorod, the length is obtained by measuring a width of the thickest part of the composite metal nanorod.

When the shape of the composite metal nanorod is generally cuboid, the following equation is employed:

$$R = \sqrt[3]{3 \times A \times B \times B / 4 / \pi}$$

where A and B have the same meanings as defined above.

Here, whether a shape of a composite metal nanorod is generally cylindrical or generally cuboid can be determined based on that of the composite metal nanorod observed with a transmission electron microscope (TEM). When a composite metal nanorod satisfies the expression $L \leq 0.2B$ (where L denotes a length of a flat portion of an end surface (cap) of the composite metal nanorod, and B denotes a minor axis length of the composite metal nanorod), a shape of the composite metal nanorod is generally cylindrical (e.g., a composite metal nanorod whose end surface is spherical (indicated by C or E in FIG. 3), that whose end surface is ellipsoidal (indicated by D in FIG. 3), and that having an ellipsoidal shape (indicated by F in FIG. 3)).

Meanwhile, when a composite metal nanorod satisfies the expression $0.2B < L \leq 0.9B$ (where L denotes a length of a flat portion of an end surface (cap) of the composite metal nanorod, and B denotes a minor axis length of the composite metal nanorod), a shape of the composite metal nanorod is generally cuboid (e.g., a composite metal nanorod whose end surface is polyhedral (indicated by A or B in FIG. 3)).

Note that the length L of the flat portion of the end surface (cap) of the composite metal nanorod is identical to a below-described length L of a portion of an end surface of a composite metal nanorod, the portion being in contact with a perpendicular line to the major axis of the composite metal nanorod.

In the present invention, as shown in FIG. 1, both end surfaces of the composite metal nanorod are preferably rounded and have no corners from the viewpoint of attaining a sharp absorption peak width shown by the minor axis and improving dichroism property.

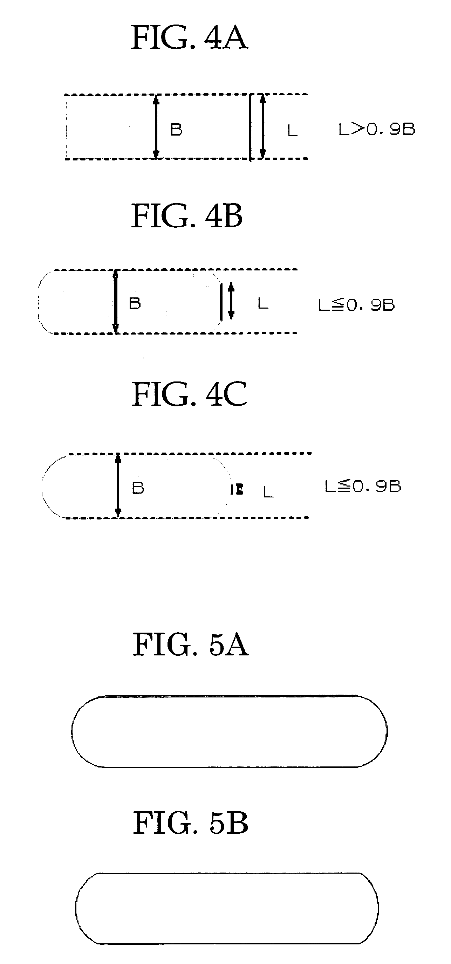

The rounded shape of the end surfaces is not particularly limited and may be appropriately determined depending on the purpose. It is, for example, spherical, ellipsoidal and polyhedral. Specifically, as shown in FIGS. 4A to 4C, both end surfaces of a composite metal nanorod are rounded preferably so that the expression $L \leq 0.9B$ is satisfied, more preferably so that the expression $L \leq 0.8B$ is satisfied.

When L is greater than 0.9B, absorption shown by the minor axis may undesirably be broad.

The composite metal nanorod of the present invention is not particularly limited, so long as it contains at least two different metals. Preferably, a core metal forming the core nanorod is different from a shell metal forming the shell.

Note that the core nanorod and the shell may individually contain two or more different metals.

The shell metal is preferably baser than the core metal. In other words, the reduction potential of the shell metal is higher than that of the core metal. The reduction potentials of the aforementioned metals are described in "Kagaku Binran Kaitei 3 Han kiso Hen II' (Manual for Chemistry 3rd edition (revised), Basic II).

The reason why the shell metal is preferably baser than the core metal is as follows. Specifically, when the core metal is baser than the shell metal, the core metal is eluted during precipitation of the shell metal.

Examples of the core metal include gold, platinum and palladium, with gold being particularly preferred.

Examples of the shell metal include silver, copper and aluminum, with silver being particularly preferred.

Thus, the composite metal nanorod of the present invention is particularly preferably a gold core-silver shell nanorod whose core is made of gold and whose shell is made of silver.

The ratio by volume of the shell to the core nanorod (shell/core nanorod) is preferably 0.1 to 130. From the viewpoint of improvement in oxidation resistance, it is more preferably 1 to 40. When the volume ratio is smaller than 0.1, a core nanorod is not sufficiently covered with a shell metal, resulting in the shell metal may not sufficiently exhibit its optical characteristics. When the volume ratio is greater than 130, the formed composite metal nanorod may be oxidized.

Here, the ratio of $V_{shell}$ (i.e., the volume of the shell) to $V_{core}$ (i.e., the volume of core nanorod) (shell/core nanorod) is calculated, depending on the shapes of a composite metal nanorod and a core nanorod, by the following equations.

That is, when each of them is generally cuboid, $V_{shell} = (A \times B \times B) - V_{core}$ and $V_{core} = (a \times b \times b)$.

When each of them is generally cylindrical, $V_{shell} = (\pi \times A \times B \times B/4) - V_{core}$ and $V_{core} = (\pi \times a \times b \times b/4)$. where A and B have the same meanings as defined above; a denotes a major axis length of the core nanorod, which length is obtained by measuring a length of the longest straight line between both ends of the core nanorod; and b denotes a minor axis length of the core nanorod, which length is obtained by measuring a width of the thickest part of the core nanorod.

Note that whether a shape of a composite metal nanorod or core nanorod is generally cylindrical or generally cuboid can be determined similar to the above description in relation to the equivalent-volume-sphere radius.

Here, in a core nanorod shown in FIG. 2, its aspect ratio is calculated by dividing major axis length a of the core nanorod by minor axis length b of the core nanorod (i.e., a/b). In the present invention, the aspect ratio of the core nanorod is an average value of aspect ratios of 200 samples which are randomly selected under a transmission electron microscope (TEM).

The aspect ratio of the core nanorod is preferably 1.5 to 24. In order for the formed composite metal nanorod to absorb light of the visible light region, the aspect ratio is preferably 1.5 to 10. When the aspect ratio is smaller than 1.5, the formed composite metal nanorod can be adjusted in absorption characteristics in a narrower range of the visible light region, which is disadvantageous. When the aspect ratio is greater than 24, a shell of shell metal is required to be thick in order for the formed composite metal nanorod to absorb light of the visible light region. As a result, the volume of the formed particles becomes large, potentially resulting in a drop in optical transparency of the formed composite metal nanorod.

The equivalent-volume-sphere radius (r) of the core nanorod is preferably 10 nm or smaller. In order for the formed composite metal nanorod to scatter light to a less extent and be improved in absorption characteristics, it is more preferably 8 nm or smaller. When the equivalent-volume-sphere radius (r) of the core nanorod is in excess of 10 nm, the formed composite metal nanorod scatters light to a considerable extent and thus, a dispersion thereof and a composition containing it may degrade in transparency.

The equivalent-volume-sphere radius (r) of the core nanorod is a radius of a sphere whose volume is the same as that of the core nanorod, and is calculated similar to the equivalent-volume-sphere radius of the composite metal nanorod.

The synthesis method of the metal nanorod is not particularly limited. Examples thereof include a chemical reduction method, electrochemical reduction method, photochemical reduction method, mesoporous alumina electroforming method, thermal reduction method, and ultrasonic reduction method. Among these, a chemical reduction method is particularly preferable from the viewpoint of productivity.

As the synthesis of the metal nanorod by a chemical reduction method, it is possible to employ the methods described, for example, in Gold Nanorods, Langmuir 1999, 15, pp. 701-709; Chem. Commun., 2001, pp. 617-618; Silver Nanorods, Chem.Comm., 7(2001) pp. 617-618, and Gold Core-Silver Shell Nanorods, J. Phys. Chem.B, 108 (2004) pp. 5,882-5,888.

Also, in the present invention, the synthesis method of the composite metal nanorod include the after-mentioned seed crystal forming method, core nanorod forming step and shell forming step, and preferably include other steps as necessary.

- Seed crystal forming step -

The seed crystal forming step is a step of forming seed crystals by subjecting to reduction reaction a solvent containing a first metal compound.

- Core nanorod forming step -

The core nanorod forming step is a step of forming core nanorods by subjecting to reduction reaction a solvent containing seed crystals, a surfactant and a first metal compound.
Examples of the first metal compound include metal salts, metal complexes and organic metal compounds.
Examples of the metal contained in the first metal compound include gold, platinum and palladium, with gold being particularly preferred.
The acid forming the metal salts may be an inorganic or organic acid.
The inorganic acid is not particularly limited and may be suitably selected in accordance with the intended use. Examples thereof include nitric acid, and hydrohalic acids, such as hydrochloric acid, hydrobromic acid and hydroiodic acid.
The organic acid is not particularly limited and may be suitably selected in accordance with the intended use. Examples thereof include carboxylic acid and sulfonic acid.
Examples of the carboxylic acid include acetic acid, butyric acid, oxalic acid, stearic acid, behenic acid, lauric acid and benzoic acid.
Examples of the sulfonic acid include methylsulfonic acid.
Examples of the metal salts include silver nitrate, chloroauric acid and chloroplatinic acid.
The chelating agent used for forming the metal complexes is not particularly limited and may be suitably selected in accordance with the intended use. Examples thereof include acetylacetonate and EDTA. Alternatively, the above metal salts and a ligand may form the metal complexes. Examples of the ligand include imidazole, pyridine and phenylmethylsulfide.
Note that the metal compound encompasses acids of halogenated metal ion complexes (e.g., chloroauric acid and chloroplatinic acid) and alkali metal salts (e.g., sodium chloroaurate and sodium tetrachloropalladate).

- Shell forming step -

The shell forming step is a step of forming a shell on the core nanorod by subjecting to reduction reaction a solvent containing the core nanorod, a second metal compound, a surfactant and a vinylpyrrolidone compound.
Examples of the second metal compound include metal salts, metal complexes and organic metal compounds.
Examples of the metal contained in the second metal compound include silver, copper and aluminum, and particularly preferred is silver.
The metal salts, metal complexes and organic metal compounds used as the second metal compound are similar to those used as the first metal compound.
The reduction reaction is performed by, for example, heating of the solvent, photoreduction, addition of a reducing agent, and chemical reduction. Particularly preferably, it is performed by adding a reducing agent to the solvent.
Examples of the reducing agent include hydrogen gas, sodium borohydride, lithium borohydride, hydrazine, ascorbic acid, amines and thiols. Note that the chemical reduction may also be performed by electrolysis.
The solvent is not particularly limited and may be suitably selected in accordance with the intended use. Examples thereof include water; alcohol solvents such as methanol, ethanol, n-propanol, isopropanol, t-butyl alcohol, glycerin, ethylene glycol, triethylene glycol, ethylene glycol monomethyl ether, diethylene glycol dimethyl ether, propylene glycol, dipropylene glycol and 2-methyl-2,4-pentanediol; ketone solvents such as acetone, methyl ethyl ketone (MEK), methyl isobutyl ketone, cyclohexanone, cyclopentanone, 2-pyrrolidone and N-methyl-2-pyrrolidone; ester solvents such as ethyl acetate and butyl acetate; amide solvents such as dimethylformamide and dimethylacetamide; nitrile solvents such as acetonitrile; ether solvents such as diethyl ether, dibutyl ether, tetrahydrofuran and dioxane; halogenated hydrocarbons such as chloroform, dichloromethane, carbon tetrachloride, dichloroethane, tetrachloroethane, methylene chloride, trichloroethylene, tetrachloroethylene and chlorobenzene; phenols such as phenol, p-chlorophenol, o-chlorophenol, m-cresol, o-cresol and p-cresol; aromatic hydrocarbons such as benzene, toluene, xylene, methoxybenzene and 1,2-dimethoxybenzene; carbon bisulfide; ethyl cellosolve; and butyl cellosolve. These solvents may be used alone or in combination.
Examples of the vinylpyrrolidone compound include polyvinylpyrrolidone (PVP) and 1-vinyl-2-pyrrolidone, with polyvinylpyrrolidone (PVP) being particularly preferred.
In the polyvinylpyrrolidone (PVP), the number of repeating units of pyrrolidone is preferably 85 or more, more preferably 300 to 12,000. When the number of repeating units of pyrrolidone is less than 85, PVP cannot adsorb on specific crystal faces of metal particles and then may undesirably become spherical particles.

The surfactant is not particularly limited and may be suitably selected in accordance with the intended use. Examples thereof include cetyltrimethylammonium salts (e.g., cetyltrimethylammonium bromide (CTAB), cetyltrimethylammonium chloride (CTAC) and cetyltrimethylammonium hydroxide (CTAH)), octadecyltrimethylammonium salts, tetradecyltrimethylammonium salts, dodecyltrimethylammonium salts, decyltrimethylammonium salts, octyltrimethylammonium salts and hexyltrimethylammonium salts.

Cationic surfactants such as quaternary ammonium salts (e.g., cetyltrimethylammonium bromide (CTAB)) have bacteriocidal property and thus, concern about adverce effects on the environment (e.g., toxicity to aquatic organisms) arises. CTAB, therefore, must be recovered in the relevant step in powder form to reduce effects on the environment. For example, aqueous gold nanorod solution containing CTAB is left to stand at 5°C for 12 hours, and the precipitated CTAB crystals are separated through filtration with a filter fabric (#200). Through this treatment, about 75% of CTAB can be recovered in a solid state. If recovered during the course of nanorod production, CTAB can be reused. In addition, the time required for purification with an ultrafiltration membrane can be shortened, leading to reduction in production cost and effects on the environment.

The composite metal nanorod of the present invention may be covered with a dispersing agent, a dielectric material made of metal oxide (e.g., a silicon oxide, aluminum oxide, and titanium oxide), and polymer (e.g., polyvinylpyrrolidone and polystyrene).

Composite metal nanorod covered with such a dielectric material can be controlled in its absorption properties and can be provided with various properties such as thermal stability and oxidation resistance.

The dispersing agent is not particularly limited, as long as it is a compound capable of preventing nanorods from aggregation through charge repulsion and/or stearic hindrance with being adsorbed thereon and of imparting water-solubility and/or oil solubility to nanorods, and may be suitably selected in accordance with the intended use.

Examples of the compound capable of preventing nanorods from aggregation through charge repulsion include low-molecular-weight ionic compounds (e.g., quaternary ammonium compounds, sulfonic acid compounds, phosphoric acid compounds and carboxylic acid compounds), and high-molecular-weight ionic compounds. From them, a compound used can be selected in light of surface potential and/or pH conditions (acidity or basicity) of particles intended to be dispersed.

The compound capable of preventing nanorods from aggregation through stearic hindrance may contain a group for adsorbing on the particle surface and a moiety for stearic hindrance.

Preferred examples of the group include S-containing functional groups (e.g., thiol, disulfide and sulfoxide); P-containing functional groups (e.g., phosphoric acid and phosphine); O-containing functional groups (e.g., carbonyl, carboxyl, ether and hydroxyl); and N-containing functional groups (e.g., amine, amino, ammonium, nitro, hydroxylamine, azo and imine).

Specific examples of the compounds having any one of these groups include Lupazol (a polyethyleneimine-based compound) and Tamol (a sulfonic acid-based compound) (produced by BASF Co.); and a thiol-terminated polymer (product of Polymer Source Inc.) (e.g., a thiol-terminated polyethylene glycol and thiol-terminated polystyrene glycol). Besides, preferred examples of the dispersing agent include DISPERBIK-180, DISPERBIK-184, DISPERBIK-190, DISPERBIK-192, DISPERBIK-2000, and DISPERBIK-2001 (produced by BYK-Chemie Co.). These may be used alone or in combination.

A composite metal nanorod-containing composition of the present invention contains the composite metal nanorod of the present invention and a binder; and may contain other components as necessary.

The binder is not particularly limited, as long as it is a thermoplastic resin having high optical transparency, and may be suitably selected in accordance with the intended use. Examples thereof include polyvinyl acetal resins, polyvinyl alcohol resins, polyvinyl butyral resins, polymethyl methacrylate resins, polycarbonate resins, polyvinyl chloride resins, saturated polyester resins and polyurethane resins. These may be used alone or in combination.

Examples of the other components include solvents, dispersants, and surfactants.

The solvent is not particularly limited and may be suitably selected in accordance with the intended use. Examples thereof include water; alcohol solvents such as methanol, ethanol, n-propanol, isopropanol, t-butyl alcohol, glycerin, ethylene glycol, triethylene glycol, ethylene glycol monomethyl ether, diethylene glycol dimethyl ether, propylene glycol, dipropylene glycol and 2-methyl-2,4-pentanediol; ketone solvents such as acetone, methyl ethyl ketone (MEK), methyl isobutyl ketone, cyclohexanone, cyclopentanone, 2-pyrrolidone and N-methyl-2-pyrrolidone; ester solvents such as ethyl acetate and butyl acetate; amide solvents such as dimethylformamide and dimethylacetamide; nitrile solvents such as acetonitrile; ether solvents such as diethyl ether, dibutyl ether, tetrahydrofuran and dioxane; and chloroform. These solvents may be used alone or in combination.

Examples of the antioxidants include ascorbic acid, citric acid, polyvinyl alcohol resins and triazole compounds. These may be used alone or in combination.

Note that the composite metal nanorod-containing composition may additionally contain a crosslinking agent and/or plasticizer, in order to improve the quality of a film formed therefrom. For example, when a firm film is intended to be formed, a crosslinking agent, such as boric acid, is added to the composition. In contrast, when a flexible film is intended to be formed, a plasticizer, such as glycerin, is added to the composition. The crosslinking agent and plasticizer may be incorporated during film formation. Alternatively, they may be applied through wet coating after film formation or film stretching.

Note that a dispersing agent adsorbed on the surfaces of composite metal nanorods may be appropriately substituted with another dispersing agent in consideration of compatibility to a solvent and binder used.

Also, other particles than the composite metal nanorods may be mixed with the composition so that the resultant composition has various properties such as UV and/or heat ray-absorbing property and has the same refractive index as glass. For example, the composition may be provided with UV ray-absorbing property and/or heat ray-shielding property through addition of semiconductive metal oxide particles.

- Thermoplastic Resin -

The thermoplastic resin is not particularly limited, as long as it is a polymer which is capable of dispersing the metal nanorods, has high transparency and is stretchable. From the viewpoint of stretchability and orientation properties of the metal nanorods, preferred are polyvinyl alcohol (PVA) resins.

The polyvinyl alcohol resin is commercially available in the form of a powder or pellet. For example, it is possible to use KURARAY POVAL 105, 117, 124, 135, 205, 217, 224 and 235 (produced by KURARAY Co., Ltd.), and the like.

The saponification degree of the polyvinyl alcohol resin is preferably 80 mole% to 100 mole%. It is more preferably 85 mole% to 100 mole% from the viewpoint of the orientation properties and optical properties.

The polyvinyl alcohol resin may be modified. For example, polyvinyl formals and polyvinyl acetals which are individually modified with polyvinyl butyral or aldehydes are exemplified.

The polymerization degree of the polyvinyl alcohol resin is preferably 300 to 10,000. It is more preferably 500 to 4,000 from the viewpoint of the coating applicability and stretchability.

The polyvinyl alcohol resin can be used as a polyvinyl alcohol resin solution after being dissolved in an appropriate solvent.

The solvent is not particularly limited, and examples thereof include water, diemthylsulfoxide, N-methylpyrrolidone, and glycols, with water being preferred in terms of the solubility and dryness after the coating of the polyvinyl alcohol resin solution.

When water is used as the solvent, a proper organic solvent may be mixed therewith. Examples of the organic solvent to be mixed with water include alcohols such as ethanol, n-propanol, isopropanol, butanol and methanol; alcohol-based solvents such as glycerine, ethylene glycol, triethylene glycol, ethylene glycol monomethylether, diethylene glycol dimethylether, propylene glycol, and dipropylene glycol; ketone-based solvents such as acetone, 2-pyrrolidone, and N-methyl-2-pyrrolidone; amide-based solvents such as dimethylformamide, and dimethylacetoamide; ether-based solvents such as tetrahydrofuran, and dioxane; and acetonitrile. These solvents may be used alone or in combination.

The concentration of the polyvinyl alcohol resin in the polyvinyl alcohol resin solution is preferably 0.1% by mass to 20% by mass. It is more preferably 0.5% by mass to 10% by mass from the viewpoint of the coating applicability and formability of a thin layer.

The polyvinyl alcohol resin solution may contain, besides the metal nanorods being dichroic material, a surfactant, hardener, plasticizer, dispersant, antioxidant, corrosion inhibitor, ultraviolet absorber, heat ray blocking agent, anti-wetting agent, thermal stabilizer, dye, pigment, metal oxide, metal nitride, conductive particles, and the like.

The surfactant is incorporated into the polyvinyl alcohol resin solution for enhancing the coating applicability, is not particularly limited and may be suitably selected in accordance with the intended use. Examples thereof include nonionic surfactants, cationic surfactants, anionic surfactants and amphoteric surfactants.

Examples of the nonionic surfactants include polyoxyethylene alkyl ethers, polyoxyethylene alkyl phenol ethers, alkyl glucoxides, polyoxyethylene fatty acid esters, sucrose fatty acid esters, sorbitan fatty acid esters, polyoxyethylene sorbitan fatty acid esters and fatty acid alkanolamides.

Examples of the cationic surfactants include alkyltrimethyl ammonium salts, dialkyldimethyl ammonium salts, alkyldimethylbenzyl ammonium salts and amine salts.

Examples of the anionic surfactants include soaps (fatty acid sodium/potassium salts), alkylbenzenesulfonic acid salts, higher alcohol sulfuric acid ether salts, polyoxyethylene alkyl ether sulfuric acid salts, $\alpha$-sulfo fatty acid esters, $\alpha$-olefin sulfonic acid salts, monoalkyl phosphoric acid ester salts and alkane sulfonic acid salts.

Examples of the amphoteric surfactants include alkylamino fatty acid salts, alkylbetaines and alkyl amine oxides. These may be used alone or in combination.

The hardener is incorporated into the polyvinyl alcohol resin solution for improving the quality of the resultant film. Materials thereof are not particularly limited, and a boric acid, diphenylboric acid are exemplified.

The plasticizer is incorporated into the polyvinyl alcohol resin solution for imparting the flexibility of the resultant film. Materials thereof are not particularly limited, and various low-molecular glycols and high-molecular glycols are exemplified.

The hardener and plasticizer may be incorporated into the polyvinyl alcohol resin solution. Alternatively, after a coating layer is formed on a thermoplastic substrate, they may be applied thereonto by wet coating.

Examples of the antioxidant include ascorbic acids, citric acids, and triazole compounds. These may be used alone or in combination.

Coating layers to be formed on the thermoplastic resin substrate may be only a single layer of a metal nanorod-containing polyvinyl alcohol resin layer. Further, functional films containing metal nanorods, a ultraviolet absorber, heat ray-blocking agent, anti-wetting agent, thermal stabilizer, dye, pigment, metal oxide, metal nitride, conductive particles, etc. may be stacked on the polyvinyl alcohol resin layer.

These layers may be formed on the thermoplastic resin substrate before the PVA layer is applied onto the thermoplastic resin substrate, or alternatively may be stacked on the PVA layer, or may be formed after film stretching. (the method for producing a polarizing film)

The method for producing a polarizing film of the present invention includes at least a composition layer forming step, and a stretching step.

- Composition layer Forming Step .

The composition layer forming step is a step of forming a composition layer containing at least dichroic anisotropic metal nanoparticles and a thermoplastic resin on a stretchable substrate.

The forming method of the composition layer is not particularly limited and may be suitably selected in accordance with the intended use. The composition layer is preferably formed by, for example, a method in which a composition liquid containing at least dichroic anisotropic metal nanoparticles and a thermoplastic resin is applied onto a stretchable substrate and then dried.

In the coating method, firstly, a composition liquid is prepared in which at least the dichroic anisotropic metal nanoparticles and the thermoplastic resin are dissolved and/or dispersed.

The solvent is not particularly limited and may be suitably selected in accordance with the intended use. Examples thereof include water; alcohol solvents such as methanol, ethanol, n-propanol, isopropanol, t-butyl alcohol, glycerin, ethylene glycol, triethylene glycol, ethylene glycol monomethyl ether, diethylene glycol dimethyl ether, propylene glycol, dipropylene glycol and 2-methyl-2,4-pentanediol; ketone solvents such as acetone, methyl ethyl ketone (MEK), methyl isobutyl ketone, cyclohexanone, cyclopentanone, 2-pyrrolidone and N-methyl-2-pyrrolidone; ester solvents such as ethyl acetate and butyl acetate; amide solvents such as dimethylformamide and dimethylacetamide; nitrile solvents such as acetonitrile; ether solvents such as diethyl ether, dibutyl ether, tetrahydrofuran and dioxane; halogenated hydrocarbons such as chloroform, dichloromethane, carbon tetrachloride, dichloroethane, tetrachloroethane, methylene chloride, trichloroethylene, tetrachloroethylene and chlorobenzene; phenols such as phenol, p-chlorophenol, o-chlorophenol, m-cresol, o-cresol and p-cresoh aromatic hydrocarbons such as benzene, toluene, xylene, methoxybenzene and 1,2-dimethoxybenzene; carbon bisulfide; ethyl cellosolve; and butyl cellosolve. These solvents may be used alone or in combination.

Next, the composition liquid is applied onto the stretchable substrate.

The coating method is not particularly limited, and a common coating method may be employed. Examples of thereof include wet a coating method, bar coating method, wire coating method, roll coating method, gravure coating method, spray coating method, dye coating method, dip coating method, and spin-coating method.

Conditions for the drying after the coating of the composition liquid are not particularly limited, as long as the applied coating liquid is dried at a temperature at which the stretchable substrate is not deformed, and the coating liquid is preferably dried at 100°C or lower.

In the present invention, the drying was performed in the following manner. A stretchable substrate whose surface was coated with the composition liquid was placed in a clean oven, with the stretchable substrate being attached on a stainless steel plate, followed by heating at 60°C for 15 minutes.

Also, when the stretchable substrate with the composition layer formed on a surface thereof is wound, it may be wound together with a cover film to prevent blocking.

The cover film is not particularly limited and may be the same film as used for the stretchable substrate. For example, a polyolefin resin film and a polyester resin film are exemplified. From the viewpoint of prevention of blocking and facility of winding the stretchable substrate together therewith, a film made of polypropylene, polyethylene, polyethylene terephthalate or the like is preferred.

The thickness of the cover film is preferably 1 $\mu$m to 1,000 $\mu$m, more preferably 3 $\mu$m to 50 $\mu$m.

The upper limit of thickness of the dried composition layer is not particularly limited, as long as it is 25 $\mu$m or less. It is however preferably 15 $\mu$m or less, particularly preferably 10 $\mu$m or less.

The lower limit of thickness of the dried composition layer is not particularly limited and may be suitably selected in accordance with the intended use. It is however preferably 0.16 $\mu$m or more.

When the thickness is less than 0.16 μm, dichroic anisotropic metal nanoparticles in the coating layer are excessively proximate to each other, possibly resulting in a change of absorption characteristics of the dichroic anisotropic metal nanoparticles and/or breakage of the composition layer into pieces. When the thickness is more than 25 μm, the orientation properties of the dichroic anisotropic metal nanoparticles may degrade.

-- stretchable substrate --

The stretchable substrate is not particularly limited, as long as it can be stretched. It is however particularly preferably the thermoplastic resin mentioned above, or a stretchable material that can be stretched at a temperature of 150°C or lower at which the dichroic anisotropic metal nanoparticles do not degrade.

Examples of the stretchable substrate include a polyester resin film, polyolefine resin film, nylon resin film, polyvinyl chloride resin film and polycarbonate resin film. As the polyester resin film, an amorphous polyethylene terephthalate film and a polyethylene terephthalate film, etc. are exemplified. As the polyolefin resin film, a polyethylene film, a polypropylene film, etc. are exemplified. In particular, preferred is an unstretched film from the viewpoint of the stretchability, and more preferred is an unstretched polyethylene terephthalate film from the view point of the capability of being stretched to 6 times or more at 150°C or lower.

Specific examples of the unstretched polyethylene terephthalate film include PETMAX (film thickness: 300 μm, provided with antistatic coating on one surface side, produced by TOYOBO Co., Ltd.).

The glass transition temperature of the stretchable substrate is not particularly limited. It is however preferably 150°C or lower.

The thickness of the stretchable substrate is preferably 10 μm to 1,000 μm, more preferably 100 μm to 700 μm, from the viewpoint of handleability in coating and film stretching.

The stretchable substrate should be provided with characteristics described below. That is, the stretchable substrate has a contact angle at which a metal nanorods-dispersed layer forming a polarizing film can be formed; the composition layer will not be peeled off from the stretchable substrate in the stretching step; and when a resulting polarizing film is to be stacked on another base material, the stretchable substrate can be peeled off from the polarizing film after being stretched with the polarizing film.

As the stretchable substrate, it is also possible to use the one that has been subjected to a surface treatment for improve the coating applicability of the composition liquid and to an antistatic treatment for reducing the peeling charge that could be caused when the polarizing film is peeled off.

Examples of the surface treatment for improving the coating applicability of the composition liquid include a corona treatment, flame treatment, plasma treatment, UV ozone treatment, and primer treatment.

In the primer treatment, a primer resin, such as a polyurethane resin, and a polyester resin, can be used.

The antistatic treatment is not particularly limited. For example, the stretchable substrate is provided with metal oxide particles such as ITO, and ATO; a deposition film; a conductive material such as metal nanoparticles, and nanowires; and an antistatic agent such as quaternary ammonium salt.

These surface treatments may be provided on one surface or both surfaces of the stretchable substrate, depending on the purpose, or may be further provided inside the stretchable substrate for the sake of imparting intended performance capabilities.

Stretching Step .

The stretching step is a step of stretching the composition layer together with the stretchable substrate to form a polarizing film on the stretchable substrate.

In a polarizing film in which the degree of orientation of the dichroic anisotropic metal nanoparticles in the composition layer is 0.85 or higher, a relationship between t and d is represented by the following Equation (1) (where t denotes a thickness of the polarizing film, and d denotes a thickness of the composition layer).

Note that, in the following Equation (1), $T_{MD}$ denotes a draw ratio of the polarizing film in a uniaxially longitudinally stretched direction, and $T_{TD}$ denotes a shrinkage ratio of the polarizing film in a direction perpendicular to the stretched direction.

$$t = d \times (T_{MD})^{-1} \times (T_{TD})^{-1} \qquad \text{Equation (1)}$$

From Equation (1), for example, when $T_{TD}$ is equal to 0.5 times, $T_{MD}$ is equal to 4 times, and the thickness d of the composition layer is 1 μm to 25 μm, the thickness t of the stretched polarizing film is calculated as being 0.5 μm

to 12.5 μm.

Next, in order to make the resulting polarizing film exhibit polarizability, the stretchable substrate with the composition layer applied on a surface thereof (abbreviated to "laminated film") is subjected to stretching.

The stretching direction is not particularly limited, as long as the laminated film can be stretched. For example, roll-uniaxial-longitudinal stretching, and tenter stretching are exemplified.

The roll-uniaxial-longitudinal stretching method is not particularly limited, and examples thereof include a method in which an object is uniaxially longitudinally stretched between rolls having different circumferential speed; and a method of uniaxially stretching an object so as to be roll-pressed against a heat roll. In order to produce a polarizing film having a large area, tenter stretching is preferable.

In the tenter stretching, in general, a laminated film can be uniaxially laterally stretched in a direction perpendicular to the direction which the laminated film is conveyed, however, the laminated film is relaxed or shrunk in parallel with the direction of the laminated film being conveyed by providing a relaxing process before or after the uniaxial-lateral stretching, or simultaneously to the uniaxial-lateral stretching, and thereby the orientation properties can be improved.

The relaxing process is a process in which the laminate film is shrunk. For example, a tension applied to a laminated film is relaxed or the zone temperature of the relaxing process is increased.

Alternatively, a preheating step, a relaxing step, a heat fixing step, and a cooling step may be incorporated before or after the stretching step.

The draw ratio is not particularly limited and may be suitably selected in accordance with the intended use. When uniaxial-longitudinal stretching is employed, the draw ratio is preferably 1.5 times to 8 times. When uniaxial-lateral stretching is employed, it is preferably 1.5 times to 8 times.

A polarizing film stretched in the draw ratio range can exhibit excellent polarizability without causing breakage.

The drawing temperature is not particularly limited. It is however preferably around a glass transition temperature of the stretchable substrate and the PVA contained in the composition layer.

Specifically, the drawing temperature is preferably 60°C to 150°C, more preferably 80°C to 120°C. Within the drawing temperature range, it is possible to obtain excellent stretchability and to prevent the stretchable substrate and the composition layer (PVA) from degrading.

In order to prevent degradation due to oxidation of the composition layer (PVA), the stretching process may be performed under nitrogen atmosphere.

(polarizing plate)

The polarizing plate of the present invention includes the polarizing film described above.

The embodiment of the polarizing plate is not particularly limited provided that it has the polarizing film, and may be suitably selected in accordance with the intended use. However, in a preferred embodiment of the polarizing plate, a base material is provided respectively on one surface of the polarizing film and an opposite surface thereof.

The polarizing film may be used as a laminate film in a state of being provided with the stretchable substrate, however, it is preferred that the polarizing film be laminated on a base material before being used, because a stretched thermoplastic resin substrate has a strong curling tendency and a high birefringence.

The polarizing can be laminated on a protective film such as a polyvinyl butyral (PVB) film and a triacetylcellulose (TAC) film which are capable of bonding glass; a glass which is a transparent base material; a substrate or a molded product, each of which is formed of a polycarbonate resin, an acrylic resin or the like.

The embodiment of the polarizing plate mentioned above is not particularly limited, and there may be exemplified by a first embodiment and a second embodiment described below.

- First Embodiment -

The first embodiment of the polarizing plate is configured such that a first base material and a second base material are provided in this order, respectively, on one surface of the polarizing film and an opposite surface thereof.

The first base material is not particularly limited and may be suitably selected in accordance with the intended use. Examples thereof include, but not limited to, a polyvinyl butyral resin (PVB) film, and an ethylene-vinyl copolymer resin (EVA) film. These materials are commercially available. As the polyvinyl butyral resin film, S-LEC (produced by Sekisui Chemical Co. Ltd.), SAFLEXAR-11, and RB-41 (produced by SORCIA Japan Co. Ltd.) may be used, for example. As the ethylene-vinyl copolymer resin film, S-LEC EN (produced by Sekisui Chemical Co. Ltd.), and SAFLEX (produced by SORCIA Japan Co. Ltd.) may be used, for example.

The second base material is not particularly limited may be suitably selected in accordance with the intended use. There may be exemplified by glass, a substrate or a molded product, each of which is formed of a polycarbonate resin, an acrylic resin or the like.

The thickness of the first base material is not particularly limited, however, it is preferably 100 μm to 1,000 μm.

The first base material may contain a plasticizer, ultraviolet ray absorber, heat ray-blocking agent, pigment, etc., as necessary.

The first base material may also be configured to incorporate the same composition as that of an intermediate layer used in the after-mentioned antiglare vehicular window.

The second base material may also be configured to incorporate the same composition as that of a glass base material used in the after-mentioned antiglare vehicular window.

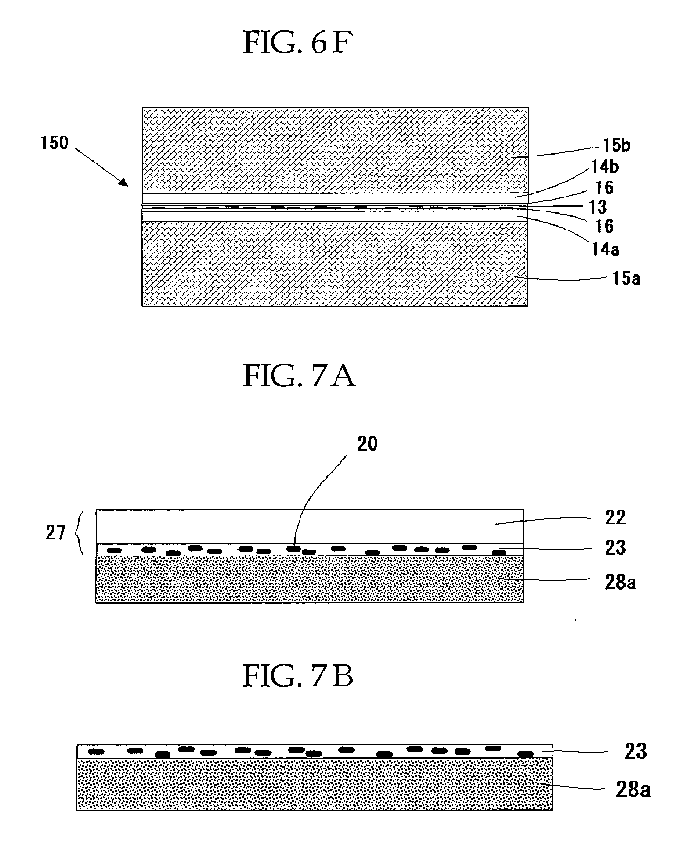

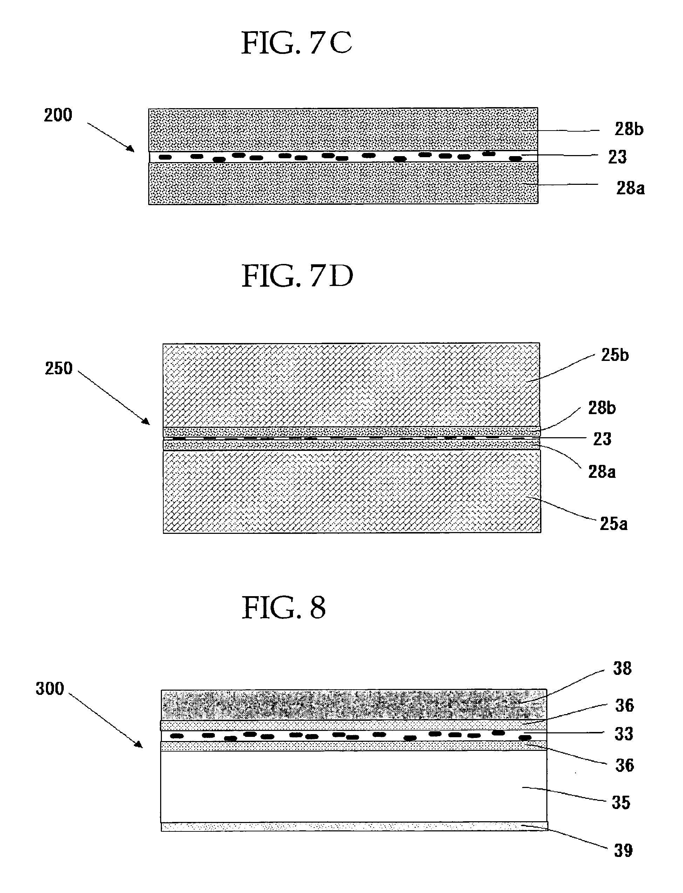

A configuration example of a polarizing plate 150 (250) according to the first embodiment is shown in FIG. 6F (FIG. 7D). In the configuration example, a polarizing film 13 (23) is configured such that a first base material 14a, 14b (28a, 28b) and a second base material 15a, 15b (25a, 25b) are provided in this order, respectively, on one surface of the polarizing film 13 (23) and an opposite surface thereof via an adhesive layer 16.

- Second Embodiment -

The second embodiment of the polarizing plate is configured such that a base material is provided respectively on one surface of the polarizing film and an opposite surface thereof, and the base material is one of a protective film and a transparent base material.

The protective film is not particularly limited and may be suitably selected in accordance with the intended use. Examples thereof include, but not limited to, cellulose acetate resin films such as a triacetylcellulose film, and a diacetylcellulose film; acrylic resin films; polycarbonate resin films; polyolefin resin films such as a polyethylene film, and a polypropylene film; cyclic polyolefin resins films such as a polyester resin film, and a polynorbornene resin film; polyethylene naphthalate resin films polyimide resin films; polyamide resin films; nylon resin films; and fluororesin films.

Among these, from the viewpoint of optical properties, preferred are triacetylcellulose films (produced by Fujifilm Holdings Corporation), and cyclic polyolefine resin films such as ZEONOR and ZEONEX (produced by Nippon Zeon Corp.), ARTON (produced by JSR Corporation).

The thickness of the protective film is preferably 30 $\mu$m to 300 $\mu$m, more preferably 50 $\mu$m to 200 $\mu$m.

The transparent base material is not particularly limited and may be suitably selected in accordance with the intended use. There may be exemplified glass materials including optical glass such as float glass, blue plate glass, white plate glass, green glass, and BK-7; and a plate or a molded product, each of which is formed of a polycarbonate resin or an acrylic resin.

These base materials may be flat or curved.

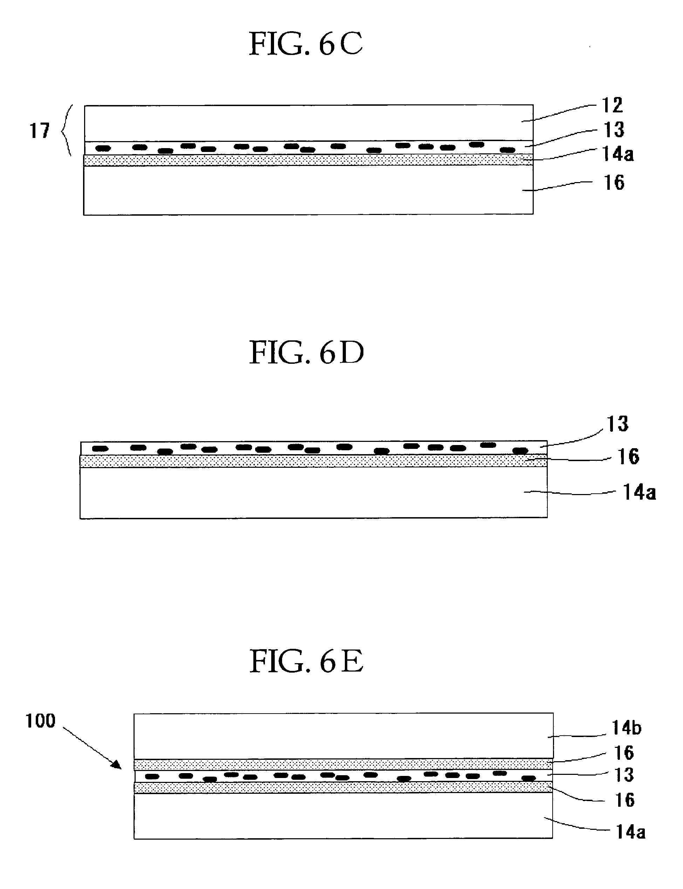

A configuration example of a polarizing plate 150 (200) according to the second embodiment is shown in FIG. 6E (FIG. 7C). In the configuration example, a polarizing film 13 (23) is configured such that a first base material 14a, 14b (28a, 28b) is provided respectively on one surface of the polarizing film 13 (23) and an opposite surface thereof.

(Method For Producing Polarizing Plate)

The method for producing a polarizing plate of the present invention includes at least a polarizing film laminating step, and a laminate forming step, and includes other steps as necessary.

< Polarizing Film Laminating Step >

In the polarizing film laminating step, a base material is laminated on one surface of a polarizing film, the polarizing film being produced by the method for producing a polarizing film of the present invention, the one surface opposing a surface provided with a stretchable substrate, and the stretchable substrate is peeled off from the surface having been provided with the stretchable substrate.

As the stretchable substrate, it is possible to use a stretchable substrate for use in the method for producing a polarizing film of the present invention.

In lamination/attachment of the base material on the polarizing film, when the adhesion between the polarizing film and the base material is sufficient, they are bonded to each other by pressure contact using a laminator or a calender, or heat lamination using a heat laminator. When the adhesion therebetween is insufficient, the base material can be laminated on and bonded to the polarizing film via an adhesive, a pressure-sensitive adhesive, or an adhesive sheet. When the adhesive and the adhesive sheet is used, an adhesive which is optically isotropic and transparent in the visible light region is used.

As such an adhesive, besides a polyvinyl alcohol adhesive, an acrylic adhesive, and a polyester adhesive, an adhesive sheet such as PANACLEAN PD-S1 (produced by Panack Co., Ltd.) is used.

As the base material, the same base material as used as the first base material and the second base material in the polarizing plate can be used.

The method of peeling off the stretchable substrate from the polarizing film is not particularly limited, and it the stretchable substrate can be peeled off therefrom using a winder or the like. On this occasion, when the stretchable substrate is rolled up with a winder under charge conditions, charge may be removed by an ionic air generator, etc.

< Laminate Forming Step >

In the laminate forming step, the base material is further provided on the surface of the polarizing film opposing the surface having been provided with the base material, so as to form a laminate in which the base material is provided on both the surfaces of the polarizing film.

In the laminate forming step, in order to provide the base material on the surface of the polarizing film, the same method as used in the polarizing film laminating step can be employed.

< Other Steps >

The other steps are not particularly limited and may be suitably selected in accordance with the intended use. Examples thereof include a combining step.

- Combining step -

In the combining step, the laminate is combined with or sandwiched by a further base material, from one surface of the laminate and the other surface opposing the one surface.

The further base material is not particularly limited, however, glass, and a substrate or a molded product formed of a polycarbonate resin or an acrylic resin are preferred, with glass being more preferred.

The glass may be configured to incorporate the same composition as that of a glass base material used in the after-mentioned antiglare vehicular window.

The method of combining the laminate with the base material is not particularly limited and may be suitably selected in accordance with the intended use. For example, known methods for producing a laminated glass are exemplified.

The combining step can be carried out as a production process of a polarizing plate in the form where a laminate produced by sandwiching a polarizing film between two sheets of the first base material is combined with the second base material.

The method of providing a polarizing film on the first base material is not particularly limited. For example, a hat lamination method, a calendering method, and an attaching method using the above-mentioned adhesive or adhesive sheet are exemplified.

In the heat lamination method, for example, the polarizing film can be attached to the first base material by a heat laminator equipped with a heat roller.

As the adhesive, a solution containing a binder compatible with both of the base material and the polarizing film may be used as an adhesive.

For example, when the base material is a polyvinyl butyral film (PVB film), an isopropanol solution containing polyvinyl butyral is applied onto the PVB film, the polarizing film is attached to the PVB film, dried, and then the stretchable substrate is peeled off therefrom.

On that occasion, the polyvinyl butyral solution used as an adhesive may contain a plasticizer, a ultraviolet absorber, an antioxidant, and an infrared ray-blocking agent, and the like.

As a solvent contained in the polyvinyl butyral solution used as an adhesive, preferred is a solvent that dissolves the PVB film but does not dissolve the polarizing film.

Examples of such a solvent include isopropanol, toluene, acetone, and methylethylketone. These solvents may be sued alone or in combination.

Onto the base material, optically functional layers such as an anti-reflection layer, a hard coat layer, an antiglare layer, and antiglare-hard coat layer, and a surface-treated layer whose surface has been subjected to hydrophilic treatment or water repellent treatment may be provided.

The provision of these functional layers may be provided on the base material may be before attaching of the polarizing film to the base material or after the attaching.

The production process of the polarizing plate will be further described in detail with reference to the drawings. Here, the following explains, as an example, the method for producing a polarizing plate based on the production processes described below, however, the present invention is not limited to the production processes.

- First Embodiment -

Firstly, the polarizing film is produced by the method for producing a polarizing film.

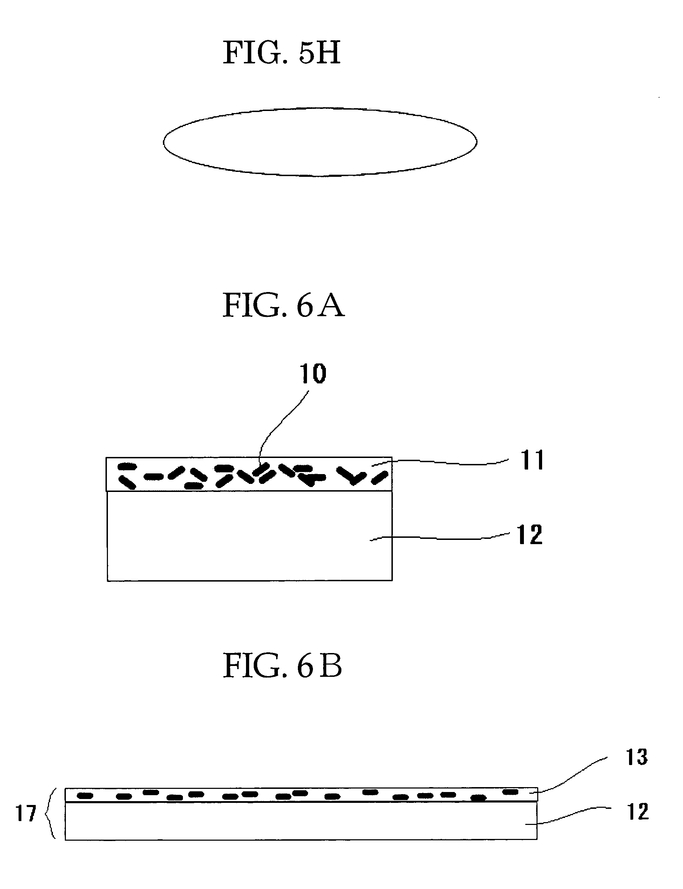

As for the polarizing film, a composition containing dichroic anisotropic metal nanoparticles 10 is applied onto a stretchable substrate 12 and dried to form a composition layer 11 (refer to FIG. 6A), and the stretchable substrate 12 with the composition layer 11 formed on a surface thereof is stretched together with the composition layer 11, and thereby a polarizing film 13 is obtained on the stretchable substrate 12 (refer to FIG. 6B).

Next, in a laminate film 17 in which the polarizing film 13 is formed on the stretchable substrate 12, the laminate film 17 is attached to a first base material 14a via an adhesive layer (an adhesive sheet) 16 so that the surface of the laminate film 17 not provided with the stretchable substrate 12 faces the first base material 14a (refer to (FIG. 6C).

After the attaching, the stretchable substrate 12 is peeled off from the laminate film 17, and further, the first base material 14a is laminated to the polarizing film 13 (refer to FIG. 6D).

Similarly to the above, a first base material 14b is laminated on a surface of the polarizing film 13 from which the stretchable substrate 12 has been peeled off, and then the first base material 14a, 14b are fixed on both surfaces of the polarizing film 13 (FIG. 6E).

Note that the fixing of the first base material 14a, 14b on the both surface of the polarizing film 13 may be performed sequentially or at a time. Also, a separator film (e.g., polypropylene film) may be inserted between the first base material 14a and 14b so as to keep the first base material 14a and 14b from bonding to each other.

With this manner, it is possible to obtain a polarizing plate 100 in the form of a laminate in which the polarizing film 13 is sandwiched by the first base material 14a and 14b.

Meanwhile, when a polarizing plate (e.g., laminated glass), in which the first base material 14a, 14b are used as intermediate films and combined with the second base material 15a, 15b is produced, it can be produced by a known production method of a laminated glass (refer to FIG. 6F).

In such a method, for example, the polarizing plate 100 is combined with base material (glass plates) 15a, 15b, from both surface sides of the polarizing plate 100, preliminarily pressed by heat lamination etc., and then heated in an autoclave at a 150°C for 30 minutes, thereby making it possible to produce a polarizing plate (laminated glass) 150 according to an aspect where the polarizing plate 100 is combined with base material (glass plates) 15a and 15b (refer to FIG. 6F).

- Second Embodiment -

In a second embodiment of the method for producing a polarizing plate of the present invention, which differs from the first embodiment, a polarizing plate is produced without using an adhesive layer (an adhesive sheet layer).

Firstly, in the same manner as in the production of the laminate film 17 (refer to FIGS. 6A and 6B) in the first embodiment, a laminate film 27 is produced in which a polarizing film 23 containing dichroic anisotropic metal nanoparticles 20 on a stretchable substrate 22.

Next, the laminate film 27 is directly attached to a first base material 28a so that the surface of the laminate film 27 not provided with the stretchable substrate 22 faces the first base material 28a (refer to FIG. 7A).

After the attaching, the stretchable substrate 22 is peeled off from the laminate film 27, and the first base material 28a is laminated on the polarizing film 23 (refer to FIG. 7B).

Similarly, a first base material 28b is laminated on the surface of the polarizing film 23 from which the stretchable substrate 22 has been peeled off, and then the first base material 28a, 28b are fixed on both surfaces of the polarizing film 23 (FIG. 7C).

Note that the fixing of the first base material 28a, 28b on the both surface of the polarizing film 23 may be performed sequentially or at a time.

With this manner, it is possible to obtain a polarizing plate 200 in the form of a laminate in which the polarizing film 23 is sandwiched by the first base material 28a, 28b.

Note that in the second embodiment in which no adhesive layer (adhesive sheet layer) is not used, the polarizing plate may be produced as a polarizing plate (e.g., laminated glass) 250, in which a base material 28a, 28b are used as intermediate films and combined with two sheets of another base material 25a, 25b (refer to FIG. 7D), in the same manner as in the first embodiment in which an adhesive layer (an adhesive sheet layer) is used.

As another aspect of the method for producing the polarizing plate (laminated glass) 250 shown in FIG. 7D, over the second base material 25a (a glass plate), the first base material 28a (an intermediate film) and a laminate film 27 are combined in this order, subsequently, the stretchable substrate 22 is peeled off from the laminate film 27, and the first base material 28b (the intermediate film) and the second base material 25b (a substrate made of glass, etc.) are further stacked in this order on the surface of the laminate film 27 from which the stretchable substrate 22 has been peeled off, and combined together, thereby the polarizing plate (laminated glass) 250 may be produced.

As still another aspect of the method for producing the polarizing plate (laminated glass) 250 shown in FIG. 7D, a laminate (100) in the form of the polarizing film 13 which is provided, on both surfaces, with the first base material 28a, 28b is laminated, with being sandwiched by the second base material 25a, 25b, and combined together, thereby the polarizing plate (laminated glass) 250 may be produced.

- Third and Fourth Embodiments -

As to the method for producing a polarizing plate according to the first and second embodiments, the combining step using the second base material is not necessarily required. When the first base material is, for example, the protective film such as a TAC film or a transparent base such as glass plate, the polarizing plate can be produced as the polarizing plate 100 (third embodiment) shown in FIG. 6E in the first embodiment or the polarizing plate 200 (fourth embodiment) shown in FIG. 7C in the second embodiment.

- Other Embodiments -

In addition to the above, as the layer configuration of a polarizing plate, the same type of base materials are not necessarily provided on respective surfaces of the polarizing film in the first to fourth embodiments, base materials may be selected depending on the purpose, to be provided on the polarizing film.

Also, the polarizing plate may be configured to further provide the surface treatment layer such as a reflection preventing layer.

Specifically, it can be configured as follows.

FIG. 8 shows a polarizing plate 300 having a layer configuration in which a reflection preventing layer 39/a glass substrate 35/an adhesive sheet 36/a polarizing film 33/an adhesive sheet 36/and a TAC film 38 are provided in this order.

The polarizing plate 300 can be produced by providing, on a surface of the glass substrate 35, the reflection preventing layer 39, and providing, on another surface of the glass substrate 35, the adhesive sheet 36, the polarizing film 33, the adhesive sheet 36 and the TAC film 38. The glass substrate 35 provided with the reflection preventing layer 39 can be attached together by passing through a laminator.

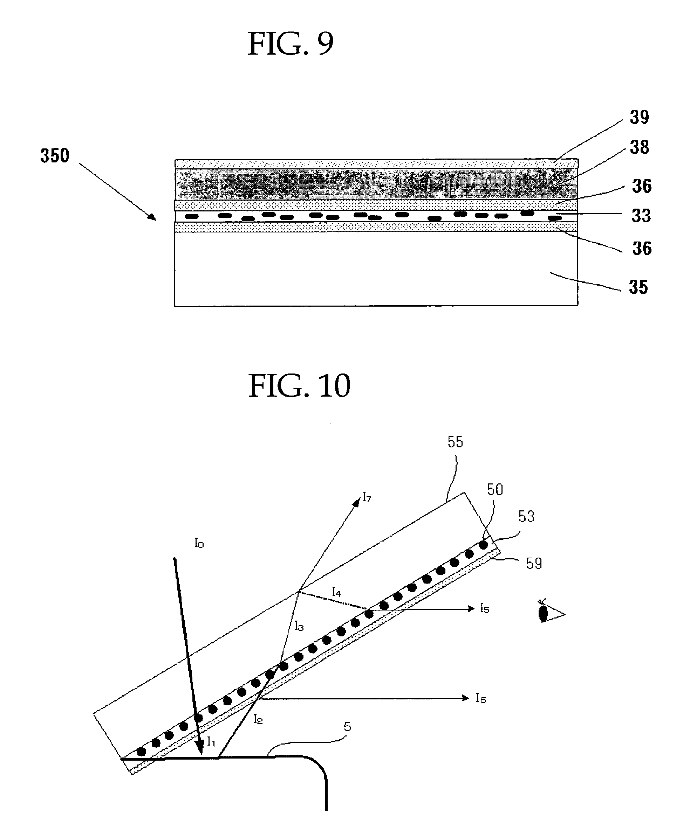

The reflection preventing layer can also be provided on a protective film such as a TAC film. This layer configuration is shown in FIG. 9. A polarizing plate 350 shown in FIG. 9 has a layer configuration in which a glass substrate 35/an adhesive layer 36/a polarizing film 33/an adhesive sheet 36/a TAC film 38/and a reflection preventing layer 39 are provided in this order.

(Antiglare Vehicular Window)

The antiglare vehicular window of the present invention includes the polarizing film of the present invention and further includes other layers as necessary. The antiglare vehicular window preferably includes, as the other layers, an anti-reffection film.

As the polarizing film, a polarizing film according to the present invention is used.

The polarizing film is preferably provided on the base material side of the inside surface of a vehicle (the surface side of a vehicle on which outside light is not incident).

In the antiglare vehicular window, it is preferable that an angle of the base material surface with respect to a horizontal reference plane be 20° to 50°, and when viewed by a driver in the vehicle, the direction of the average of absorption axes of anisotropic absorber in the polarizing film be oriented at an angle of less than ± 30° with respect to an intersection between the base material surface and the horizontal reference plane.

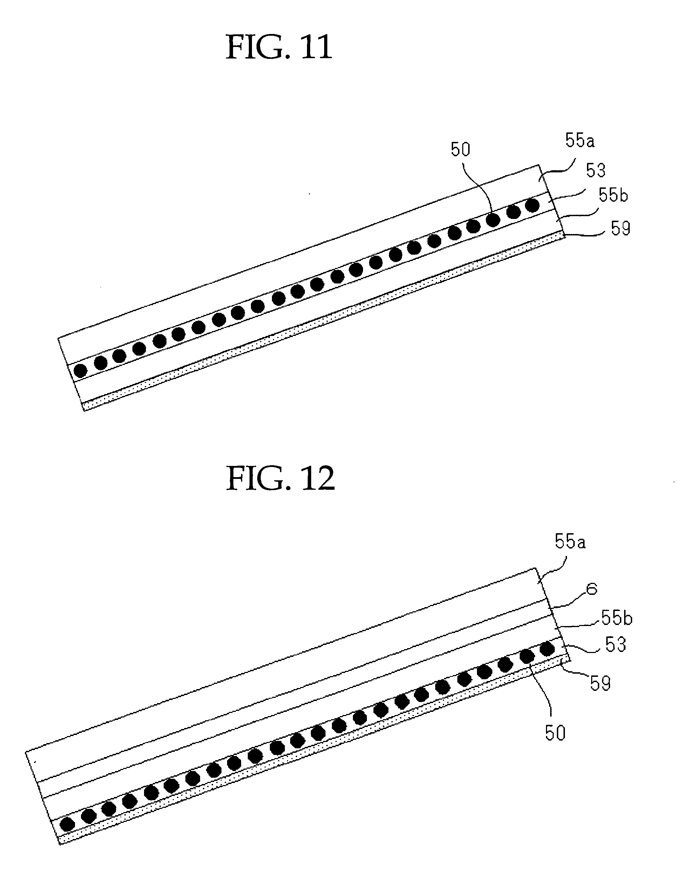

Here, the antiglare vehicular window is preferably formed on a surface (back surface) of a base material constituting the front glass (windshield) of the vehicle, opposite to the light incident side surface, as shown in FIG. 10. In the case of a laminated glass formed in a unit structure which includes an intermediate layer between two plate glasses and a reflection preventing layer 59, it is preferred that the polarizing film 53 be formed as an intermediate layer, as shown in FIG. 11, or the polarizing film 53 be formed on a surface (back surface) of the laminated glass opposite to the light incident side surface as shown in FIG. 12.

In the antiglare vehicular window of the present invention, in order to reduce the aerodynamic drag, an angle of the surface of a windshield in a vehicle with respect to the surface of a dashboard 5 (horizontal reference plane) is preferably 20° to 50°, more preferably 25° to 40°, as shown in FIG. 10.

The vehicle is not particularly limited, as long as an angle of the surface of the windshield with respect to the horizontal reference plane of a dashboard is in the range of 20° to 50°, and may be suitably selected in accordance with the intended use. Examples of the vehicle include automobiles, buses, auto-trucks, electric trains, super express trains, airplanes, passenger planes and vessels. Among these vehicles, particularly preferred are automobiles.

The following explains the principle of glare reduction using the antiglare vehicular winder of the present invention with reference to FIG. 10. As stated above, a front glass (windshield) 55 (55a, 55b) is commonly provided at an angle of approximately 30° with respect to the horizontal reference plane. On that occasion, a shadow of the dashboard 5, which obstructs the view of the driver in the vehicle is a light reflected to an inner surface of the windshield 55 at an incident angle of approximately 60°.

Here, if a polarizing film 53, which contains dichroic anisotropic metal nanoparticles 50 and has an anisotropic absorber,P which is oriented substantially in a horizontal direction to the horizontal plane of the glass, is assumed to have a transmittance of 75%, it is conceivable that sun light $I_o$ is divided into a horizontal polarization component $Te_0$ and a vertical polarization component Tmo. The polarization components $Te_0$ and Tmo passing through a windshield 1 will pass through the anisotropic absorber P, thereby $Te_0$ will be attenuated to one-half intensity to be $Te_1$, and Tmo will pass almost straight therethrough to be $Tm_1$ When light $I_2$ which is scattered by the dashboard 5 is represented by $Te_0$ and $Tm_0$, the following equation is obtained.

$I_2 = Te_2 + iTm_2$
$= aTe_1 + aiTm_1$ (where a denotes a reflectance of the dashboard)
$== (a/2) Te + aiTmo$

Since a vertical component aiTmo of the light $I_2$ has an incident angle which is substantially Brewster angle to the surface of the windshield, the vertical component $aiTm_0$ passes straight an optical path of $I_3$ and $I_7$ to be emitted outside.

Here, a Brewster angle is an incident angle where light reflected at an interface of substances having different refractive indexes is completely polarized.

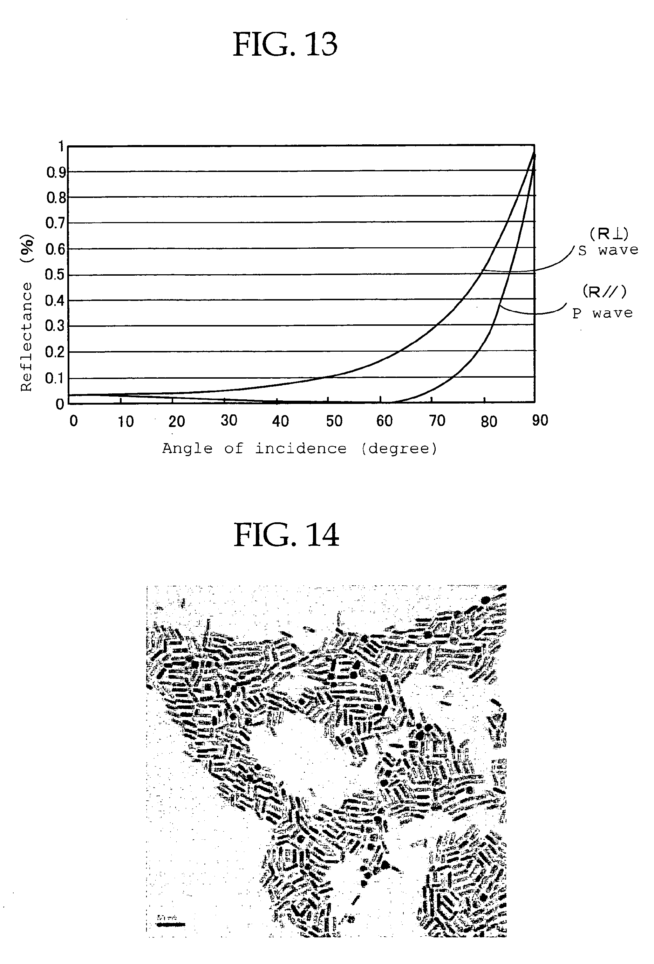

When light enters an interface of two substances having different refractive indexes at a certain angle, a reflectance of a horizontal polarization component (P polarization) relative to the incident angle and that of a vertical polarization component (S polarization) relative to the incident angle are different. As shown in FIG. 13, P polarization decreases to 0 at a Brewster angle and then increased thereafter. S polarization monotonically increases. As stated above, a visible light which enters glass having a refractive index of 1.46 from air having a refractive index of 1 has a Brewster angle of approximately 56°.

Next, a horizontal component (a/2)Te of the light $I_2$ is reflected at approximately 3% by an antireflective film, which is the outermost surface of the back surface of the windshield, and the reflected light component enters into the drive's eyes. Also, remaining 97% of the horizontal component (a/2)Te enters inside the windshield, one-half of the horizontal component is emitted outside, and the remaining half of the horizontal component is reflected toward the inside of the vehicle to be $I_4$, which is then absorbed by the anisotropic absorber P and further reduced to one half to become light $I_5$. As a result, the light $I_5$ will enter into the driver's eyes.

$I_6 = 3/100 \cdot (a/2)Te$
$= (3a/200)Te$
$I_5 = 1/2 \cdot 1/2 \cdot 0.97 \cdot (a/2)Te$
$= (0.97/8) \cdot aTe$

Therefore, when a shadow of the dashboard, which obstructs the view of the driver in the vehicle, is represented by a light intensity $I_h$, the following equation is obtained.

$I_h = I_5 + I_6$
$= 0.97/8 \cdot aTe + (3a/200)Te$

When the reflectance a of the dashboard is regarded as approximately 10%, the following result is obtained.

$I_h = (0.0121 + 0.0015)Te$
$= 0.0136Te$

As a result, the light intensity $I_h$ of the shadow of the dashboard is 1.36%, and has a light intensity reduced by an approximately single-digit number or more, as compared to the light intensity 32% in the case where a glass is used.

< Base Material >

As a base material for use in the antiglare vehicular window of the present invention, glass is the most suitable. This is because glass has 12-year durability which is the roughly-estimated operating life of vehicles under environments where they are exposed to wind and rain, and do not disturb the polarization. However, recently, plastics, which have high-durability and high-isotropy and are rarely disturb polarization, for example norbornene polymers, are provided even in polymer plate products. Materials other than glass can be also used for the base material.

- Glass Base Material -

The glass base material is not particularly limited and may be suitably selected in accordance with the intended use, and for example, single-layer glass, laminated glass, reinforced laminated glass, multilayered glass, reinforced multilayered glass, laminated multilayered glass are exemplified.

As types of a plate glass constituting the above-mentioned glass, for example, transparent plate glass, template glass, wire glass, line wire glass, reinforced plate glass, heat ray-reflecting plate glass, heat ray-absorbing plate glass, Low-E plate glass, and other various plate glasses.

Note that the glass base material may be a colorless transparent glass or a colored transparent glass, as long as it is a transparent glass.

The thickness of the glass base material is not particularly limited and may be suitably selected in accordance with the intended use. It is however preferably 2 mm to 20 mm, more preferably 4 mm to 10 mm.

- Laminated Glass -

A laminated glass is what has two sheets of plate glass, and an intermediate layer which is interpositioned between the two sheets of plate glass so as to be integrated in one body. Such a laminated glass is safe because shards of glass will not be scattered even upon receiving an impact from an external source, it is widely used as windshields of vehicles such as automobiles, and as windowpanes of buildings and plants, etc. In the case of use in automobiles, recently, laminated glasses having an extremely thin thickness are used to achieve the weight reduction, the thickness of one sheet of glass is 1 mm to 3 mm, and two sheets of glass are combined with an adhesive layer having a thickness of 0.3 mm to 1 mm to thereby form a laminated glass having a total thickness of approximately 3 mm to 6 mm.

As the two sheets of glass, various types of plate glass described above can be suitably used in accordance with the intended use.

As a base material used in the intermediate layer, a thermoplastic resin is preferable. Examples of the thermoplastic resin include, but not limited to, polyvinyl acetal resins, polyvinyl alcohol resins, polyvinyl chloride resins, saturated polyester resins, polyurethane resins, ethylene-vinyl acetate copolymers. Among these, particularly preferred are polyvinyl acetal resins in that an intermediate layer which is well balanced in various capabilities such as transparency, weatherability, strength, adhesive strength and the like.

The polyvinyl acetal resin is not particularly limited and may be suitably selected in accordance with the intended use. Examples thereof are polyvinyl alcohol resins obtained by reacting polyvinyl alcohol (hereinbelow, abbreviated to "PVA") with formaldehyde; narrowly-defined polyvinyl acetal resins obtained by reacting PVA with acetaldehyde; and polyvinyl butyral resins obtained by reacting PVA and n-butylaldehyde.

The PVA used in synthesis of the polyvinyl acetal resin is not particularly limited and may be suitably selected in accordance with the intended use. However, those having an average polymerization degree of 200 to 5,000 are preferred, and those having an average polymerization degree of 500 to 3,000 are more preferred. When the average polymerization degree is less than 200, the strength of an intermediate layer formed using the resulting polyvinyl acetal resin may be excessively weakened. When it is more than 5,000, defects may occur during formation of the resulting polyvinyl acetal resin.

The polyvinyl acetal resin is not particularly limited and may be suitably selected in accordance with the intended use. A polyvinyl acetal resin with a degree of acetalization of 40 mole% to 85 mole% is preferred, and a polyvinyl acetal resin with a degree of acetalization of 50 mole% to 75 mole% is more preferred. When a polyvinyl acetal resin with a degree of acetalization less than 40 mole% or more than 85 mole% is used, it may be difficult to synthesize it because of its reaction mechanism. The degree of acetalization can be measured in accordance with JIS K6728.

To the intermediate layer, besides the thermoplastic resin, a plasticizer, a pigment, an adhesion adjustor, a coupling agent, a surfactant, an antioxidant, a thermal stabilizer, a light stabilizer, a ultraviolet ray absorber, an infrared ray absorber, etc. may be added.

The forming method of the intermediate layer is not particularly limited and may be suitably selected in accordance with the intended use. For example, a method is exemplified, in which a composition containing a thermoplastic resin and other components is uniformly kneaded, and the kneaded product is formed into a sheet by a conventionally known method such as extrusion method, calendering method, press method, casting method, and inflation method.

The thickness of the intermediate layer is not particularly limited and may be suitably adjusted in accordance with the intended use. It is however preferably 0.3 mm to 1.6 mm.

In the antiglare vehicular window, the intermediate layer is preferably the polarizing film of the present invention in terms of productivity, durability and the like. When the intermediate layer is a laminate which includes the polarizing film, it is the same as above except that the intermediate layer contains anisotropic absorber, and the anisotropic absorber is made oriented in a substantially horizontal direction. Note that it is also possible to provide the polarizing film on one surface side of a laminated glass.

The method for producing the laminated glass is not particularly limited and may be suitably selected in accordance with the intended use. For example, an intermediate film is sandwiched in between two sheets of transparent glass plates, and the laminated-glass structural body thus prepared is put, for example, into a vacuum bag like a rubber bag, the vacuum bag is connected to an exhaust ventilation system, subjected to pre-bonding at a temperature of approximately 70°C to 110°C while sucking under reduced pressure (deaerating) so that the pressure inside the vacuum bag is a degree of pressure reduction of approximately -65 kPa to -100 kPa, and then the pre-bonded laminated-glass structural body is placed in an autoclave, followed by heating and pressurizing under the conditions of a temperature of 120°C to 150°C and a pressure of 0.98 MPa to 1.47 MPa to be completely bonded, thereby obtaining a desired laminated glass.

< Antiglare Film >

The laminated glass preferably has an antiglare film at the outermost surface of at least one surface side of the base material, and more preferably has a polarizing film on a surface of the base material opposite to the light incident side surface (the surface of the base material in a vehicle) and an antiglare film on the polarizing film.

The antiglare film is not particularly limited as long as it has adequate durability and weatherability in practical use and is capable of suppressing the reflectance at an incident angle of 60° up to 5% or less, and may be suitably selected in accordance with the intended use. For example, (1) a film provided with fine concavo-convexes on its surface, (2) a two-layered film with a high refractive index film in combination with a low refractive index film, (3) a three-layered film in which a median refractive index film, a high refractive index film and a low refractive index film are sequentially stacked, etc. are exemplified. Among these, (2) and (3) are particularly preferable.

These antiglare films may be formed directly one a glass surface by a sol-gel method, sputtering method, vapor deposition method, CVD method or the like. Also, an antiglare film may be formed on a transparent substrate by a coating method such as dip coating method, air-knife method, curtain coating method, roller coating method, wire-bar coating method, gravure coating method, micro-gravure coating method, and extraction coating method, followed by making the antiglare film adhere or attached to a surface of a glass base material.

As described above, the antiglare film preferably has a layer configuration in which at least one layer having a refractive index higher than that of a low refractive index layer (i.e. a high refractive index layer), and the low refractive index layer (the outermost surface layer) are provided in this order.

When two layers of the at least one layer having a refractive index higher than that of a low refractive index layer are used, the antiglare film preferably has a layer configuration in which a intermediate refractive index layer, a high refractive index layer and a low refractive index layer (the outermost surface layer) are provided in this order on a transparent base material. An antiglare film having such a layer configuration is designed so as to have refractive indexes satisfying the relationship of "refractive index of high refractive index layer > refractive index of intermediate refractive index layer > refractive index of transparent substrate > refractive index of low refractive index layer". It should be noted that refractive indexes of respective refractive index layers are relatively determined.

- Transparent Base Material -

As the transparent base material, it is preferable to use a plastic film. Examples of material of the plastic film include cellulose acylate, polyamide, polycarbonate, polyester (e.g. polyethylene terephthalate, and polyethylene naphthalate), polystyrene, polyolefin, polysulfone, polyether sulfone, polyallylate, polyetherimide, polymethylmethacrylate, and polyether ketone.

- High Refractive Index Layer and Intermediate refractive index layer -

The refractive index layer having a high refractive index of the antiglare film is preferably formed of a curable film which contains inorganic compound super fine particles having an average particle diameter of 100 nm or less, and a matrix binder.

As the inorganic compound fine particles having high refractive indexes, an inorganic compound having a refractive index of 1.65 or higher is exemplified, and more preferably an inorganic compound having a refractive index of 1.9 or higher is exemplified. For example, oxides such as Ti, Zn, Sb, Sn, Zr, Ce, Ta, La, and In; composite oxides containing metal atoms of these oxides are exemplified. Particularly preferably, inorganic fine particles containing, as the main component, titanium dioxide containing at least one element selected from Co, Zr, and AL (otherwise referred to as "specific oxide(s)") are exemplified. Among these elements, Co is particularly preferable.

The total amount of the elements Co, Al, and Zr contained in Ti is preferably 0.05% by mass to 30% by mass, more preferably 0.1% by mass to 10% by mass, still more preferably 0.2% by mass to 7% by mass, particularly preferably 0.3% by mass to 5% by mass, most preferably 0.5% by mass to 3% by mass.

Co, Al, and Zr exist in internal portions or on surfaces of inorganic fine particles which primarily contain titanium dioxide. These specific metal elements may exist as oxides.

Also, preferred other inorganic particles are, for example, inorganic fine particles which are particles of a composite oxide obtained from a titanium element and at least one metal element selected from metal elements (hereinbelow, may be abbreviated to "Met") whose oxide having a refractive index of 1.95 or higher, and in which the composite oxide is doped with at least one metal ion selected from Co ions, Zr ions and Al ions (the composite oxide may be referred to as "specific multiple oxide").

Here, as a metal element of the metal oxide whose oxide having a refractive index of 1.95 or higher, Ta, Zr, In, Nd, Sb,Sn, Bi, etc. are exemplified. Among these, particularly preferred are Ta, Zr, Sn, and Bi.

The amount of the metal ion doped into the composite oxide relative to the total amount of metals [Ti + Met] constituting the composite oxide is preferably in a range not exceeding 25% by mass, from the viewpoint of maintaining refractive indexes. It is more preferably 0.05% by mass to 10% by mass, still more preferably 0.1% by mass to 5% by mass, most preferably 0.3% by mass to 3% by mass.

The metal ion may exist as a metal ion or metal atom in the composite oxide, and it is preferable that the metal ion be present, as appropriate, from a surface of the composite oxide to inside the composite oxide. It is more preferable that the metal ion be present both on the surface of the composite oxide and inside thereof.

In order to obtain super fine particles described above, the following methods are exemplified: a method of surface treating particles with a surface treatment agent; a method of forming a core-shell structure using high-refractive index particles as a core; and a method of additionally using a specific dispersing agent.

As the surface treatment agent for use in the method of surface treating particles with a surface treatment agent, for example, silane coupling agents, etc. described in JP-A Nos. 11-295503, 11-153703 and 2000-9908, anionic compounds or organic metal coupling agents disclosed in JP-A No. 2001-310432 are exemplified. As the method of forming a core-shell structure using high-refractive index particles as a core, it is possible to employ the techniques disclosed in JP-A No. 2001-166104, and U. S. Patent Application No. 2003/0202137.

Further, as the method of additionally using a specific dispersing agent, the techniques disclosed in JP-A No. 11-153703, U. S. Patent No. 6210858, and JP-A No. 2002-2776069 are exemplified.

As material used for forming a matrix, conventionally known thermoplastic resins and curable resin films, etc. are exemplified.

In addition, preferred materials are at least one composition selected from a composition containing a polyfunctional compound which contains at least two or more polymerizable groups of radically polymerizable and/or cationically polymerizable groups, an organic metal compound containing a hydrolyzable group, and partially condensed composition thereof. Examples thereof are compounds described in JP-A No. 2000-47004, 2001-315242, 2001-31871, and 2001-296401.

Furthermore, a colloidal metal oxide obtained from a hydrolyzable condensate of metal alkoxide and a curable film obtained from a metal alkoxide composition are also preferable. Examples thereof include those described in JP-A No. 2001-293818.

The refractive index of the high refractive index layer is preferably 1.70 to 2.20. The thickness of the high refractive index layer is preferably 5 nm to 10 $\mu$m, more preferably 10 nm to 1 $\mu$m.

The refractive index of the median refractive index is adjusted so as to be a value between the refractive index of the low refractive index layer and the refractive index of the high refractive index layer. The refractive index of the median refractive index is preferably 1.50 to 1.70. The thickness of the intermediate refractive index layer is preferably 5 nm to 10 $\mu$m, more preferably 10 nm to 1 $\mu$m.

- Low Refractive Index Layer -

The low refractive index layer is preferably stacked on the high refractive index layer. The refractive index of the low refractive index layer is preferably 1.20 to 1.55, more preferably 1.30 to 1.50.

The low refractive index layer is preferably structured as the outermost surface layer having abrasion resistance and antifouling property. As a method of greatly improving the abrasion resistance, it is effective to impart slipperiness to the surface of the low refractive index layer, and a thin film layer into which conventionally known silicone or fluorine is applicable thereto.

The refractive index of a fluorine-containing compound for use in the low refractive index layer is preferably 1.35 to 1.50, more preferably 1.36 to 1.47. In addition, the fluorine-containing compound is preferably a compound containing a crosslinkable or polymerizable functional group containing fluorine atom in an amount of 35% by mass to 80% by mass.

Examples of the fluorine-containing compound are compounds described in the paragraphs [0018] to [0026] of JP-A No. 9-222503, the paragraphs [0019] to [0030] of JP-A No. 11-38202, the paragraphs [0027] to [0028] of JP-A No. 2001-40284, and in JP-A Nos. 2000-284102 and 2004-45462.

As a silicone compound for use in the low refractive index layer, compounds having a polysiloxane structure are preferable. Among these, particularly preferred are compounds containing a curable functional group or a polymerizable functional group in a polymer chain and having a bridged structure in the film. For example, reactive silicone [e.g. (SILAPLANE , produced by Chisso Corporation), and polysiloxane containing a silanol group at both terminal ends (described in JP-A No. 11-258403, etc.)].

The crosslinking or polymerization reaction of a fluorine-containing polymer having a crosslinkable or polymerizable group and/or a siloxane polymer is preferably carried out, by exposure to light or heating, simultaneously with or after the coating of a coating composition for forming the outermost layer containing a polymerization initiator, sensitizer, and the like. As the polymerization initiator and the sensitizer, those known can be used.

A sol-gel cured film is also preferable, which is cured by a condensation reaction of an organic metal compound, such as a silane coupling agent, with a specific fluorine-containing silane coupling agent having a hydrocarbon group in the presence of a catalyst.

Examples of such a specific fluorine-containing silane coupling agent include polyfluoroalkyl group-containing silane compounds or partially hydrolyzed condensates thereof (compounds described in JP-A Nos. 58-142958, 58-147483, 58-147484, 9-157582, and 11-106704); and silyl compounds containing poly(perfluoroalkyl ether) which is a fluorine-containing long chain group (compounds described in JP-A Nos. 2000-117902, 2001-48590, and 2002-53804).

The low refractive index layer preferably contains, additives other than those described above, a filler (e.g. silicon dioxide (silica)), and a low refractive index inorganic compound having a primary particle size of 1 nm to 150 nm, such as fluorine-containing particles (magnesium fluoride, calcium fluorine, and barium fluoride), and the like.

In particular, in order to further suppress the increase of the refractive index, it is preferable to use hollow inorganic fine particles. The refractive index of hollow inorganic fine particles is preferably 1.17 to 1.40, more preferably 1.17 to 1.37, still more preferably 1.17 to 1.35. Note that the refractive index here means a refractive index of the entire particles and does not mean a refractive index of only outer shells forming the hollow inorganic fine particles.

The ratio of the average particle size of the hollow inorganic fine particles contained in the low refractive index layer to the thickness of the low refractive index layer is preferably 30% to 100%, more preferably 35% to 80%, still more preferably 40 to 60%.

Specifically, when the thickness of the low refractive index layer is 100 nm, the particle size of the inorganic fine particles is preferably 30 nm to 100 nm, more preferably 35 nm to 80 nm, still more preferably 40 nm to 60 nm.

Here, the refractive index of the hollow inorganic fine particles can be measured by an Abbe refractive index meter (manufactured by Atago Co., Ltd.).

As the other additives, the low refractive index layer may contain organic fine particles, etc. described in the paragraphs [0020] to[0038] of JP-A No. 11-3820, a silane coupling agent, a lubricant, a surfactant, and the like.

When the low refractive index layer is positioned under the outermost surface layer, the low refractive index layer may be formed by a vapor phase method (e.g. vacuum evaporation method, sputtering method, ion-plating method, plasma CVD method, etc.) however, it is preferable to employ a coating method in that it can be produced at low cost.

The thickness of the low refractive index layer is preferably 30 nm to 200 nm, more preferably 50 nm 150 nm, most preferably 60 nm to 120 nm.

As the other layers to be provided in the antiglare vehicular window, a hard coat layer, a forward scattering layer, a primer layer, an antistatic layer, an under coat layer, a protective layer, etc. may be provided.

- Application of Antiglare Vehicular Window -

As having been described above, since the antiglare vehicular window has a polarizing film in which the major axis of an anisotropic absorber is substantially horizontally oriented with respect to the base material surface and is provided with excellent optical anisotropic properties (anisotropic absorption, anisotropic scattering property, polarizability, birefringence, etc.), it can be favorably used as various kinds of windows of vehicles such as automobiles, buses, auto-trucks, electric trains, super express trains, airplanes, passenger planes and vessels; and additionally used in various fields, as windows for building materials such as openings and partitions in buildings, for example, general residential houses, complex housings, office buildings, stores, community facilities and industrial plants.

When the antiglare vehicular window of the present invention is used as a front glass (windshield) of a vehicle such as an automobile, as mentioned above, it can prevent reflection of vehicle instrument panels such as automobile dashboard and prevent glare from being emitted from outdoor light. Therefore, the driver's forward view is secured without being interrupted. Also, use of the antiglare vehicular window of the present invention makes it possible to employ highly designed automobile dashboard panels which are painted in bright colors and provided with pictures or designs.

EXAMPLES

Hereinafter, the present invention will be further described in detail with reference to specific Examples, however, the present invention is not limited to the disclosed Examples.

(Example 1)

(1) Synthesis of Dichroic Anisotropic Metal Nanoparticles (Particle Forming Step)

Dichroic anisotropic metal nanoparticles were synthesized through the following seed crystal forming step, core nanorod forming step, and shell forming step.

- Seed Crystal (Nanoparticle) Formation Step -

Into 100 ml of a 100 mM CTAB (cetyltrimethylammonium bromide, produced by Wako Junyaku Co., Ltd.), 5 ml of a 10 mM chlorauric acid aqueous solution was added, further 10 ml of a 10 mM sodium boron hydride aqueous solution which was dissolved immediately before use was added, and then vigorously stirred together to form gold nanoparticles (seed crystal).

- Core Nanorod Forming Step -

Into 1,000 ml of a 100 mM CTAB aqueous solution, 100 ml of a 10 mM silver nitrate aqueous solution, 200 ml of a 10 mM chlorauric acid aqueous solution, and 50 ml of a 100 mM ascorbic acid aqueous solution were added, and then stirred together to obtain a colorless transparent liquid.
Further, 100 ml of an aqueous solution of the gold nanoparticles (seed crystal) was added to the colorless transparent liquid and stirred together for 2 hours to obtain a gold nanorod aqueous solution.
The gold nanorod aqueous solution was left standing at 5°C for 12 hours to precipitate a cetyltrimethyl ammonium bromide (CTAB) crystal, and the CTAB crystal was filtered out through a nylon filter cloth (#200) to thereby obtain a gold nanorod dispersion liquid from which CTAB had been roughly removed. The rate of collection of CTAB at this stage was approximately 75%.

-- Evaluation --

The gold nanorods thus obtained were measured for an absorption spectrum using a ultraviolet-visible or near-infrared spectrometer (V-670, manufactured by JASCO Corporation) and found to possess an absorption spectrum peak at 510 nm, attributable to absorption of the minor axis of the gold nanorods and an absorption spectrum peak at 800 nm, attributable to absorption of the major axis thereof.
Subsequently, the gold nanorods were further measured for a minor axis, a major axis, an aspect ratio, and a equivalent-volume-sphere radius by observation with a transmission electron microscope (TEM). As shown in a TEM image of FIG. 14, the gold nanorods were found to be rod-shaped particles having a minor axis of 6 nm, a major axis of 21 nm, an aspect ratio of 3.5, and a equivalent-volume-sphere radius of 5.7 nm.

- Shell Forming Step -

Into 8 kg of a 1% by mass PVP (polyvinyl pyrrolidone K30, produced by Wako Junyaku Co., Ltd.) aqueous solution, 2 kg of the gold nanorod dispersion liquid, 100 ml of a 10 mM silver nitrate aqueous solution, and 100 ml of a 100 mM ascorbic acid aqueous solution were added and stirred together. Further, 280 ml of a 0.1 N sodium hydroxide aqueous solution was added to the mixture over 5 minutes until the pH reached from 7 to 8, and silver was precipitated on surfaces of the gold nanorods, thereby synthesizing gold core-silver shell nanorods.
The gold core-silver shell nanorod dispersion liquid was subjected to ultrafiltration using an ultrafiltration membrane (ACP0013, produced by Asahi Chemical Industry Co., Ltd.) so as to be condensed 10 times, thereby obtaining a gold core-silver shell nanorod dispersion liquid. The electric conductivity of the dispersion liquid at this stage was 280 mS/m.
Next, the resulting gold core-silver shell nanorod dispersion liquid was measured for optical properties, a particle size, and a volume ratio between core nanorod and shell according to the following methods.

< Optical Properties >

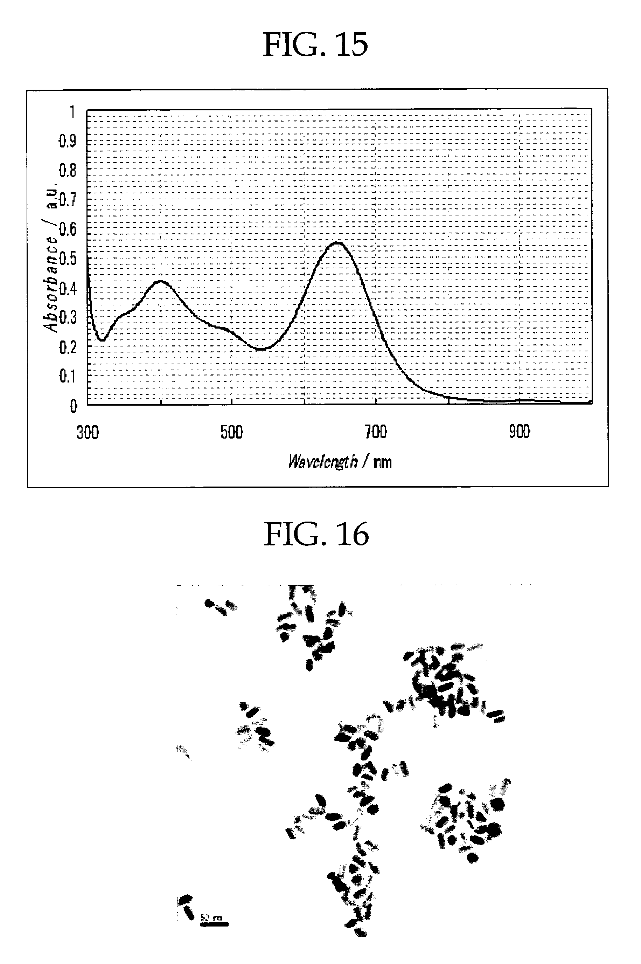

The resulting gold core-silver shell nanorod dispersion liquid was measured for an absorption spectrum using a ultraviolet-visible or near-infrared spectrometer (V-670, manufactured by JASCO Corporation) and found to possess an absorption spectrum peak at 410 nm, attributable to absorption of the minor axis of the gold core-silver shell nanorods and an absorption spectrum peak at 650 nm, attributable to absorption of the major axis thereof, as shown in FIG. 15.

< Evaluations of Particle Size, Equivalent-volume-sphere radius, and Volume Ratio Between Core Nanorod and Shell >

The resulting gold core-silver shell nanorod dispersion liquid was measured for a minor axis, a major axis, an aspect ratio, and a equivalent-volume-sphere radius by observation with a transmission electron microscope (TEM) and found to be rod-shaped particles having a minor axis of 12 nm, a major axis of 24 nm, an aspect ratio of 2.0, and a equivalent-volume-sphere radius of 9.4 nm, as shown in FIG. 16.
Also, a volume ratio of shell to nanorod (shell/core nanorod) of the gold core-silver shell nanorods was determined by observation with a transmission electron microscope (TEM) and found to be 3.6.

(2) Formation of metal nanorod-containing PVA film on stretchable substrate

(composition layer forming step)

Subsequently, a composition which had been preliminarily prepared by mixing 80.0 g of a 10% by mass PVA124 aqueous solution (produced by Kuraray Co., Ltd.), 80.0 g of pure water, and 50.0 g of the resulting gold core-silver shell nanorod dispersion liquid was applied onto a clean, unstretched polyethylene terephthalate base cut in approximately A4 paper size (stretchable substrate, PETMAX; A565GE2R/antistatic coating with an antistatic coating on one surface side/thickness: 300 $\mu$m/produced by TOYOBO Co., Ltd.) using a wire bar (#30), and dried at 60°C for 20 minutes to thereby form a metal nanorod-containing PVA layer on the stretchable substrate.

< Measurement of Spectrum >

The absorption spectrum of the resulting stretchable substrate film on which surface the metal nanorod-containing PVA layer had been formed was measured by a ultraviolet-visible or near-infrared spectrometer (V-670, manufactured by JASCO Corporation), and the resulting stretchable substrate film was found to exhibit absorption attributable to gold-silver composite nanorods contained therein.

< Measurement of Film Thickness of Composition Layer >

The film thickness of the metal nanorod-containing PVA layer was measured using a film thickness meter (laser microscope, VK-8700, manufactured by KEYENCE Inc.) after the metal nanorod-containing PVA layer was peeled off from the stretched substrate, and evaluated with an average value obtained from the number of samples (n = 10). The dried film thickness of the composition layer formed in the composition forming step (2) was 3.1 $\mu$m.

(3) Stretching of composition layer and stretchable substrate (stretching step)

The metal nanorod-containing PVA layer which had been formed on the stretched substrate in the composition forming step was longitudinally, uniaxially stretched together with the stretched substrate 4 times the original length at 100°C to thereby obtain a polarizing film of Example 1 on the stretched substrate having a width of about 20 cm.

< Evaluation of Thickness of Polarizing Film >

The film thickness of the resulting metal nanorod-containing PVA polarizing film was measured using a film thickness meter (laser microscope, VK-8700, manufactured by KEYENCE Inc.) after the polarizing film layer thus formed was peeled off from the stretched polyethylene terephthalate substrate, and evaluated with an average value obtained from the number of samples (n = 10). The dried film thickness of the polarizing film formed in the stretching step (3) was 1.6 $\mu$m.

< Evaluation of Transmittance and Degree of Orientation >

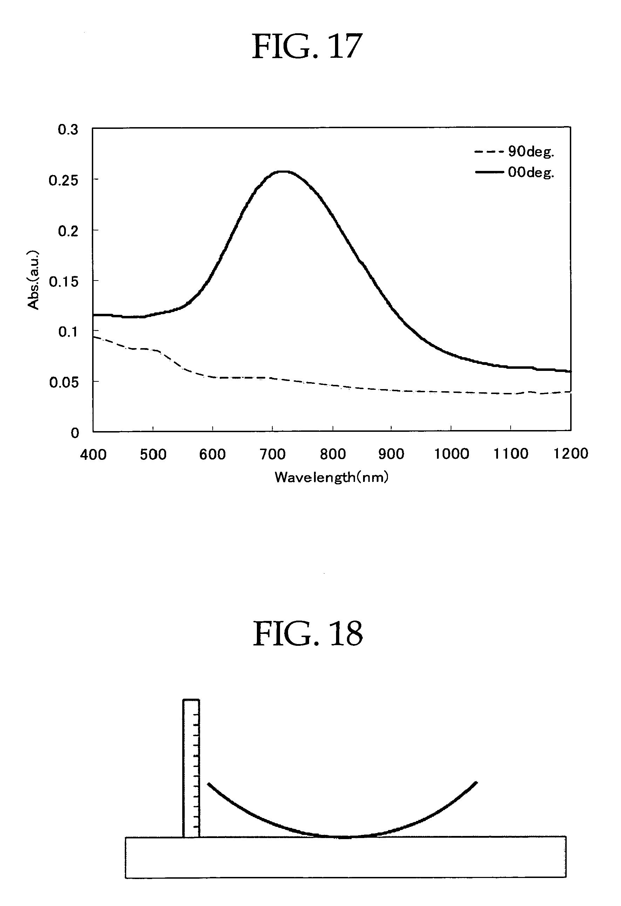

The polarizing film of Example 1 was evaluated for optical properties (polarization dependency of absorption spectrum, light transmittance, and degree of orientation).
The polarization dependency of absorption spectrum was evaluated as follows. One sheet of polarizer was placed in the optical path at the side of a polarizing film sample being placed on a ultraviolet-visible or near-infrared spectrometer (V-670, manufactured by JASCO Corporation), and a polarization spectrum was measured with varying the angle of the polarizer with respect to the stretching angle of the polarizing film sample to 0°, 45°or 90°. The results are shown in FIG. 17.

The light transmittance was evaluated with a value corrected from the absorption spectrum measured at an angle of the polarizer with respect to the stretching angle of 45°, with luminous coefficient described in JIS (R3106-1998). The light transmittance of the polarizing film of Example 1 was 73%.

The degree of orientation was evaluated by defining a ratio of absorbance of a maximum absorption wavelength, in spectra measured at 0° and 90°, attributable to a major axis of the gold-silver composite nanorods as a degree of orientation S, according to the following criteria.

A degree of orientation $1.00 \geq S > 0.90$ was graded as "A"; a degree of orientation $0.90 \geq S > 0.85$ was graded as "B"; and a degree of orientation $0.85 \geq S$ was graded as "C".

Note that the degree of orientation was represented by the following Equation 1. The degree of orientation of the polarizing film of Example 1 was 0.98 and graded as A.

$$S = (A_{0deg.} - A_{90deg.})/(A_{0deg.} + 2A_{90deg.}) \qquad \text{Equation 1}$$

- Production of Glass-Laminated Polarizing Plate -

(4) Laminated layer on PVB (polyvinyl butyral) film (polarizing film laminating step)

Onto one surface side of a PVB intermediate film (base material, thickness: 0.38 mm, produced by SORCIA Japan Co. Ltd.) cut in 10 cm × 10 cm, an isopropanol solution containing 10% by mass of polyvinyl butyral (produced by Wako Junyaku Co., Ltd.) having an average polymerization degree of 700 was applied using a bar coater (coating bar #30), and the polarizing film was stacked on the PVB intermediate film so that the surface of the polarizing film not formed with the stretchable substrate was facing to one surface of the PVB intermediate film, i.e., the surface being coated with the isopropanol solution. Then, the resulting laminate was left standing with a weight of 0.5 kg being applied thereto, at 50°C for 2 hours.

Thereafter, only the stretchable substrate was peeled off from the laminate to be a state where the PVB intermediate film was provided on one surface side of the polarizing film.

Further, onto one surface side of a PVB intermediate film (thickness: 0.38 mm, produced by SORCIA Japan Co. Ltd.) same as the above-mentioned PVB intermediate film, an isopropanol solution containing 10% by mass of polyvinyl butyral (produced by Wako Junyaku Co., Ltd.) having an average polymerization degree of 700 was applied with a bar coater (coating bar #30), and the PVB intermediate film was stacked on the polarizing film so as to face the surface of the polarizing film from which the stretchable substrate had been removed. Then, the resulting laminate was left standing with a weight of 0.5 kg being applied thereto, at 50°C for 4 hours, thereby obtaining a laminate in which both surfaces of the polarizing film were provided with the PVB intermediate film, i.e., the polarizing film being sandwiched by a pair of the PVB intermediate films.

(5) Glass laminating step

The laminate was sandwiched in between two sheets of clear glass of 5 cm × 5 cm in size and 2 mm in thickness, placed in a vacuum bag for bonding glass, in a state of being sandwiched, the inside the vacuum bag was deaerated for 30 minutes under a degree of vacuum of 2 kPa, placed in an oven heated at 100°C in a state of being deaerated, and heated for 30 minutes for tentatively bonding the glass sheets and the intermediate film.

The laminate that had been subjected to tentative bonding was placed in an autoclave and heated for 1 hour at 135°C under a pressure of 12 kg/cm$^2$, thereby producing a polarizing plate in which the polarizing film of Example 1 was sandwiched by laminated glass sheets.

< Evaluation of Shrunk Amount of Polarizing Plate during Glass Laminating Step >

The shrunk amount of the polarizing plate during the glass laminating step was evaluated by measuring a degree of shrinkage R. The degree of shrinkage R is defined as follows. Assuming that a position of the polarizing film corresponding to a center line position (a center line lying perpendicular to the stretching direction of the polarizing film) of the polarizing film (5 cm × 5 cm) before laminating glass is determined as a reference line, and a positional change between the reference line and a position corresponding to the reference line after laminating glass is regarded as a change in film size of the polarizing film surrounded by the reference line and end portions of the polarizing film, the shrinkage R is a ratio of a film size before the glass lamination to a film size after the glass lamination. The degree of shrinkage was evaluated according to the following criteria. A degree of shrinkage R smaller than or equal to 1.00 and greater than 0.95 was graded as "A", a degree of shrinkage R smaller than or equal to 0.95 and greater than 0.90 was graded as "B", and a degree of shrinkage R of 0.90 or smaller was graded as "C".

The glass-laminated polarizing plate produced in Example 1 was subjected to measurement of degree of shrinkage and found to have a degree of shrinkage of 0.98, and graded as A.

(6) Evaluation of Durability

< Evaluation of Durability>

The glass-laminated polarizing plate was evaluated for the durability in the following manner. A test sample was put in a thermo box, and changes in degree of orientation S in the maximum absorption wavelength during heating of the test sample successively at 110°C for 1,000 hours were measured. The measurement results were evaluated based on the assumption that a time period elapsed until a ratio of a degree of orientation S after the heating to a degree of orientation S before the heating became 0.7 or less was determined as a durability holding time length T, and a durability holding time length T shorter than or equal to 1,000 hr was graded as "A", a durability holding time length T shorter than 1,000 hours and longer than 500 hr was evaluated as "B", and a durability holding time length T shorter than or equal to 500 hr was graded as "C".

The durability holding time length T of the glass-laminated polarizing plate produced in Example 1 was measured for evaluation, resulted in 1,000 hours or longer, and graded as A.

- Production of Polarizing Plates Sandwiching Protective Film -

A polarizing plate in the form of a laminate, in which a polarizing film was sandwiched by two protective film sheets, was produced, through the particle forming step (1), the composition layer forming step (2) and the stretching step (3) described above, in the following manner.

(7) Lamination of protective film on TAC film

Two sheets of protective film were produced, in each of which an adhesive sheet (PD-S1; produced by Panack Co., Ltd.) was attached onto one surface of a TAC film (triacetylcellulose resin film, FUJITACK; thickness: 80 $\mu$m; produced by Fujifilm Holdings Corporation) cut in A4 paper size. Firstly, the polarizing film was stacked on one sheet of protective film so that the surface of the polarizing film not provided with the stretchable substrate was facing to the tacky surface of the protective film sheet, and the resulting laminate was passed through a laminator to bond together the polarizing film and the protective film.

After the stretchable substrate was peeled off from the polarizing film, remaining one protective film sheet was stacked on the surface of the polarizing film from which the stretchable substrate had been peeled off, and the resulting laminate was passed through a laminator to form a laminate in which the polarizing film was sandwiched by two TAC film sheets, thereby producing a polarizing plate in which the polarizing film of Example 1 was sandwiched by a pair of the protective film sheets.

< Evaluation of Curling Amount >

The curling amount of the polarizing plate sandwiched by protective film sheets was measured in the following manner. After the polarizing plate (the laminate) was heated in a thermo box at 80°C for 2 hours, it was placed horizontally on a laboratory table, and, on that occasion, a curling amount of end portions of the laminate from the horizontal surface of the laboratory table was measured as shown in FIG. 18. The curling amount was evaluated according to the following criteria. A curling amount C less than 5 mm was graded as "A", a curling amount C less than 10 mm and equal to or more than 5 mm was graded as "B", and a curling amount C equal to or more than 10 mm was graded as "C".

The curling amount C of the polarizing plate sandwiched by protective film sheets, which was produced in Example 1, was 2 mm, and graded as A.

< Evaluation of Durability >

The durability of the polarizing plate sandwiched by protective film sheets was measured in the following manner. A test sample was put in a thermo box, and changes in degree of orientation S in the maximum absorption wavelength during heating of the test sample successively at 80°C for 1,000 hours were measured.

The measurement results were evaluated based on the assumption that a time period elapsed until a ratio of a degree of orientation S after the heating to a degree of orientation S before the heating became 0.7 or less was determined as a durability holding time length T', and a durability holding time length T' shorter than or equal to 1,000 hr was graded as "A", a durability holding time length T' shorter than 1,000 hours and longer than 750 hr was evaluated as "B", and a durability holding time length T' shorter than or equal to 750 hr was graded as "C".

The durability holding time length T' of the polarizing plate sandwiched by protective film sheets, which was produced in Example 1, was measured for evaluation, resulted in 1,000 hours or longer, and graded as A.

(Example 2)

A polarizing film of Example 2 was produced in the same manner as in Example 1 except that the amount of the gold core-silver shell nanorod dispersion liquid used in the composition layer forming step (2) in Example 1 was changed from 50.0 g to 25.0 g, and the wire bar No. was changed from #30 to #50.

The thickness of the composition layer before subjected to the stretching step (3) in Example 2 was 6.5 $\mu$m. A light transmittance and a degree of orientation S of the polarizing film of Example 2 were measured for evaluation, and the polarizing film was found to have a light transmittance of 71% and a degree of orientation S of 0.98 (grade: A).

A glass-laminated polarizing plate of Example 2 was produced in the same manner as in Example 1 except that the polarizing film of Example 2 was used instead of the polarizing film of Example 1.

A degree of shrinkage R after laminating glass and a durability holding time length T of the glass-laminated polarizing plate of Example 2 were measured for evaluation, and the degree of shrinkage R resulted in 0.96 (grade: A), and the durability holding time length T resulted in 1,000 hours or longer (grade: A).

A polarizing plate sandwiched by protective film sheets of Example 2 was produced in the same manner as in Example 1 except that the polarizing film of Example 2 was used instead of the polarizing film of Example 1.

A curling amount C and a durability holding time length T' of the polarizing plate sandwiched by protective film sheets of Example 2 were measured for evaluation, and the curling amount C resulted in 2 mm (grade: A), and the durability holding time length T' resulted in 1,000 hours or longer (grade: A).

(Example 3)

A polarizing film of Example 3 was produced in the same manner as in Example 1 except that the amount of the gold core-silver shell nanorod dispersion liquid used in the composition layer forming step (2) in Example 1 was changed from 50.0 g to 12.5 g, the wire bar No. was changed from #30 to #0 (i.e. wire bar was not used), and the composition was applied onto the stretchable substrate using an applicator having a thickness of 500 $\mu$m.

The thickness of the composition layer before subjected to the stretching step (3) in Example 3 was 12.3 $\mu$m. A light transmittance and a degree of orientation S of the polarizing film of Example 3 were measured for evaluation, and the polarizing film was found to have a light transmittance of 74% and a degree of orientation S of 0.97 (grade: A).

A glass-laminated polarizing plate of Example 3 was produced in the same manner as in Example 1 except that the polarizing film of Example 3 was used instead of the polarizing film of Example 1.

A degree of shrinkage R after laminating glass and a durability holding time length T of the glass-laminated polarizing plate of Example 3 were measured for evaluation, and the degree of shrinkage R resulted in 0.95 (grade: B), and the durability holding time length T resulted in 1,000 hours or longer (grade: A).

A polarizing plate sandwiched by protective film sheets of Example 3 was produced in the same manner as in Example 1 except that the polarizing film of Example 3 was used instead of the polarizing film of Example 1.

A curling amount C and a durability holding time length T' of the polarizing plate sandwiched by protective film sheets of Example 3 were measured for evaluation, and the curling amount C resulted in 3 mm (grade: A), and the durability holding time length T' resulted in 1,000 hours or longer (grade: A).

(Example 4)

A polarizing film of Example 4 was produced in the same manner as in Example 3 except that the amount of the gold core-silver shell nanorod dispersion liquid used in the composition layer forming step (2) in Example 3 was changed from 12.5 g to 10.0 g, and the composition was applied onto the stretchable substrate using an applicator having a thickness of 1,000 $\mu$m, instead of using the applicator having a thickness of 500 $\mu$m.

The thickness of the composition layer before subjected to the stretching step (3) in Example 4 was 16.8 $\mu$m. A light transmittance and a degree of orientation S of the polarizing film of Example 4 were measured for evaluation, and the polarizing film was found to have a light transmittance of 72% and a degree of orientation S of 0.95 (grade: A).

A glass-laminated polarizing plate of Example 4 was produced in the same manner as in Example 1 except that the polarizing film of Example 4 was used instead of the polarizing film of Example 1.

A degree of shrinkage R after laminating glass and a durability holding time length T of the glass-laminated polarizing plate of Example 4 were measured for evaluation, and the degree of shrinkage R resulted in 0.94 (grade: B), and the durability holding time length T resulted in 1,000 hours or longer (grade: A).

A polarizing plate sandwiched by protective film sheets of Example 4 was produced in the same manner as in Example 1 except that the polarizing film of Example 4 was used instead of the polarizing film of Example 1.

A curling amount C and a durability holding time length T' of the polarizing plate sandwiched by protective film sheets of Example 4 were measured for evaluation, and the curling amount C resulted in 4 mm (grade: A), and the durability holding time length T' resulted in 1,000 hours or longer (grade: A).

(Example 5)

A polarizing film of Example 5 was produced in the same manner as in Example 4 except that the amount of the gold core-silver shell nanorod dispersion liquid used in the composition layer forming step (2) in Example 4 was changed from 12.5 g to 7.0 g.

The thickness of the composition layer before subjected to the stretching step (3) in Example 5 was 23.1 μm. A light transmittance and a degree of orientation S of the polarizing film of Example 5 were measured for evaluation, and the polarizing film was found to have a light transmittance of 71% and a degree of orientation S of 0.92 (grade: A).

A glass-laminated polarizing plate of Example 5 was produced in the same manner as in Example 1 except that the polarizing film of Example 5 was used instead of the polarizing film of Example 1.

A degree of shrinkage R after laminating glass and a durability holding time length T of the glass-laminated polarizing plate of Example 5 were measured for evaluation, and the degree of shrinkage R resulted in 0.93 (grade: B), and the durability holding time length T resulted in 1,000 hours or longer (grade: A).

A polarizing plate sandwiched by protective film sheets of Example 5 was produced in the same manner as in Example 1 except that the polarizing film of Example 5 was used instead of the polarizing film of Example 1.

A curling amount C and a durability holding time length T' of the polarizing plate sandwiched by protective film sheets of Example 5 were measured for evaluation, and the curling amount C resulted in 5 mm (grade: B), and the durability holding time length T' resulted in 1,000 hours or longer (grade: A).

(Comparative Example 1)

A polarizing film of Comparative Example 1 was produced in the same manner as in Example 1 except that the amount of the gold core-silver shell nanorod dispersion liquid used in the composition layer forming step (2) in Example 1 was changed from 50.0 g to 6.0 g, the wire bar No. was changed from #30 to #0 (i.e. wire bar was not used), and the composition was applied onto the stretchable substrate using an applicator having a thickness of 1,500 μm.

The thickness of the composition layer before subjected to the stretching step (3) in Comparative Example 1 was 28.1 μm. A light transmittance and a degree of orientation S of the polarizing film of Comparative Example 1 were measured for evaluation, and the polarizing film was found to have a light transmittance of 73% and a degree of orientation S of 0.89 (grade: B).

A glass-laminated polarizing plate of Comparative Example 1 was produced in the same manner as in Example 1 except that the polarizing film of Comparative Example 1 was used instead of the polarizing film of Example 1.

A degree of shrinkage R after laminating glass and a durability holding time length T of the glass-laminated polarizing plate of Comparative Example 1 were measured for evaluation, and the degree of shrinkage R resulted in 0.91 (grade: B), and the durability holding time length T resulted in 1,000 hours or longer (grade: A).

A polarizing plate sandwiched by protective film sheets of Comparative Example 1 was produced in the same manner as in Example 1 except that the polarizing film of Comparative Example 1 was used instead of the polarizing film of Example 1.

A curling amount C and a durability holding time length T' of the polarizing plate sandwiched by protective film sheets of Comparative Example 1 were measured for evaluation, and the curling amount C resulted in 5 mm (grade: B), and the durability holding time length T' resulted in 1,000 hours or longer (grade: A).

(Comparative Example 2)

A polarizing film of Comparative Example 2 was produced in the same manner as in Comparative Example 1 except that the amount of the gold core-silver shell nanorod dispersion liquid used in the composition layer forming step (2) in Comparative Example 1 was changed from 6.0 g to 4.0 g.

The thickness of the composition layer before subjected to the stretching step (3) in Comparative Example 2 was 38.5 μm. A light transmittance and a degree of orientation S of the polarizing film of Comparative Example 2 were measured for evaluation, and the polarizing film was found to have a light transmittance of 73% and a degree of orientation S of 0.87 (grade: B).

A glass-laminated polarizing plate of Comparative Example 2 was produced in the same manner as in Example 1 except that the polarizing film of Comparative Example 2 was used instead of the polarizing film of Example 1.

A degree of shrinkage R after laminating glass and a durability holding time length T of the glass-laminated polarizing plate of Comparative Example 2 were measured for evaluation, and the degree of shrinkage R resulted in 0.89 (grade: C), and the durability holding time length T resulted in 1,000 hours or longer (grade: A).

A polarizing plate sandwiched by protective film sheets of Comparative Example 2 was produced in the same manner as in Example 1 except that the polarizing film of Comparative Example 2 was used instead of the polarizing film of Example 1.

A curling amount C and a durability holding time length T' of the polarizing plate sandwiched by protective film sheets of Comparative Example 2 were measured for evaluation, and the curling amount C resulted in 6 mm (grade: B), and the durability holding time length T' resulted in 1,000 hours or longer (grade: A).

(Comparative Example 3)

A polarizing film of Comparative Example 3 was produced in the same manner as in Comparative Example 1 except that the amount of the gold core-silver shell nanorod dispersion liquid used in the composition layer forming step (2) in Comparative Example 1 was changed from 6.0 g to 3.0 g, and the composition was applied onto the stretchable substrate using an applicator having a thickness of 2,000 μm, instead of using the applicator having a thickness of 500 μm.

The thickness of the composition layer before subjected to the stretching step (3) in Comparative Example 3 was 50.7 μm. Alight transmittance and a degree of orientation S of the polarizing film of Comparative Example 3 were measured for evaluation, and the polarizing film was found to have a light transmittance of 70% and a degree of orientation S of 0.84 (grade: C).

A glass-laminated polarizing plate of Comparative Example 3 was produced in the same manner as in Example 1 except that the polarizing film of Comparative Example 3 was used instead of the polarizing film of Example 1.

A degree of shrinkage R after laminating glass and a durability holding time length T of the glass-laminated polarizing plate of Comparative Example 3 were measured for evaluation, and the degree of shrinkage R resulted in 0.85 (grade: C), and the durability holding time length T resulted in 1,000 hours or longer (grade: A).

A polarizing plate sandwiched by protective film sheets of Comparative Example 3 was produced in the same manner as in Example 1 except that the polarizing film of Comparative Example 3 was used instead of the polarizing film of Example 1.

A curling amount C and a durability holding time length T' of the polarizing plate sandwiched by protective film sheets of Comparative Example 3 were measured for evaluation, and the curling amount C resulted in 8 mm (grade: B), and the durability holding time length T' resulted in 1,000 hours or longer (grade: A).

(Comparative Example 4)

A Vinylon film (VF-P#7500, produced by Kuraray Co., Ltd.) was immersed in room temperature water for 60 seconds, and then immersed for 10 seconds in an aqueous solution containing iodine (produced by Wako Junyaku Co., Ltd., 0.033% by mass) and potassium iodide (produced by Wako Junyaku Co., Ltd., 0.033% by mass), which had been preliminarily heated at 40°C.

Subsequently, the resulting film was immersed for 60 seconds in an aqueous solution containing a boric acid (produced by Wako Junyaku Co., Ltd., 4.0% by mass) and potassium iodide (produced by Wako Junyaku Co., Ltd., 4.0% by mass), which had been preliminarily heated at 60°C to be stretched by 5 times, and then dried, thereby producing a polarizing film having a film thickness of 46.9 μm and a degree of orientation of 0.99.

A glass-laminated polarizing plate of Comparative Example 4 was produced in the same manner as in Example 1 except that the polarizing film of Comparative Example 4 was used instead of the polarizing film of Example 1.

A degree of shrinkage R after laminating glass and a durability holding time length T of the glass-laminated polarizing plate of Comparative Example 4 were measured for evaluation, and the degree of shrinkage R resulted in 0.86 (grade: C), and the durability holding time length T was shorter than 500 hours (grade: C).

A polarizing plate sandwiched by protective film sheets of Comparative Example 4 was produced in the same manner as in Example 1 except that the polarizing film of Comparative Example 4 was used instead of the polarizing film of Example 1.

A curling amount C and a durability holding time length T' of the polarizing plate sandwiched by protective film sheets of Comparative Example 4 were measured for evaluation, and the curling amount C resulted in 10 mm (grade: C), and the durability holding time length T' was shorter than 750 hours (grade: C).

(Comparative Example 5)

The method described in JP-A No. 2001-343522 was further tested to produce an iodine-PVA polarizing film having a film thickness of 3.2 μm and a degree of orientation of 0.93.

A glass-laminated polarizing plate of Comparative Example 5 was produced in the same manner as in Example 1 except that the polarizing film of Comparative Example 5 was used instead of the polarizing film of Example 1.

A degree of shrinkage R after laminating glass and a durability holding time length T of the glass-laminated polarizing plate of Comparative Example 5 were measured for evaluation, and the degree of shrinkage R resulted in 0.96 (grade: A), and the durability holding time length T was shorter than 500 hours (grade: C).

A polarizing plate sandwiched by protective film sheets of Comparative Example 5 was produced in the same manner as in Example 1 except that the polarizing film of Comparative Example 5 was used instead of the polarizing film of Example 1.

A curling amount C and a durability holding time length T' of the polarizing plate sandwiched by protective film sheets of Comparative Example 5 were measured for evaluation, and the curling amount C resulted in 2 mm (grade: A), and the durability holding time length T' was shorter than 750 hours (grade: C).

(Comparative Example 6)

A composition which had been preliminarily prepared by mixing 80.0 g of a 10% by mass PVA124 aqueous solution (produced by Kuraray Co., Ltd.), and 50.0 g of the gold core-silver shell nanorod dispersion liquid that had been obtained in Example 1 was applied onto a clean, unstretched polyethylene terephthalate base cut in approximately A4 paper size (stretchable substrate, PETMAX; A565GE2R/antistatic coating with an antistatic coating on one surface side/ thickness: 300 μm/produced by TOYOBO Co., Ltd.) using an applicator having a thickness of 1 mm (wire bar (#0), and dried at 25°C for 12 hours, and the film thus formed was peeled off from the stretchable substrate to thereby form a gold core-silver shell nanorod-containing PVA layer. The film thickness of the gold core-silver shell nanorod-containing PVA layer was 63.1 μm.

The gold core-silver shell nanorod-containing PVA layer thus obtained was uniaxially stretched 4 times the original length to thereby obtain a polarizing film having a film thickness of 39.4 μm and a degree of orientation of 0.82.

A glass-laminated polarizing plate of Comparative Example 6 was produced in the same manner as in Example 1 except that the polarizing film of Comparative Example 6 was used instead of the polarizing film of Example 1.

A degree of shrinkage R after laminating glass and a durability holding time length T of the glass-laminated polarizing plate of Comparative Example 6 were measured for evaluation, and the degree of shrinkage R resulted in 0.85 (grade: C), and the durability holding time length T was 1,000 hours or longer (grade: A).

A polarizing plate sandwiched by protective film sheets of Comparative Example 6 was produced in the same manner as in Example 1 except that the polarizing film of Comparative Example 6 was used instead of the polarizing film of Example 1.

A curling amount C and a durability holding time length T' of the polarizing plate sandwiched by protective film sheets of Comparative Example 6 were measured for evaluation, and the curling amount C resulted in 10 mm (grade: C), and the durability holding time length T' was 1,000 hours or longer (grade: A).

The results obtained in Examples 1 to 5 and Comparative Examples 1 to 6 were collectively exhibited in Table 1.

Table 1

| No. | Dichroic material | Matrix | Presence or absence of stretchable substrate | Thickness of composition layer (before stretched) | Thickness of composition layer(after stretched) | Transmittance | Degree of orientation S | Degree of shrinkage R (during laminating glass) | Durability T at 110°C | Curling amount C of polarizing film sandwiched by TAC | Durability T' at 80°C |
|---|---|---|---|---|---|---|---|---|---|---|---|
| Ex. 1 | gold-silver nanorod | PVA | Provided | 3.1 $\mu$m | 1.6 $\mu$m | 73% | A (0.98) | A (0.98) | A | A (2 mm) | A |
| Ex. 2 | gold-silver nanorod | PVA | Provided | 6.5 $\mu$m | 3.2 $\mu$m | 71% | A (0.98) | A (0.96) | A | A (2 mm) | A |
| Ex. 3 | gold-silver nanorod | PVA | Provided | 12.3 $\mu$m | 6.2 $\mu$m | 74% | A (0.97) | B (0.95) | A | A (3 mm) | A |
| Ex. 4 | gold-silver nanorod | PVA | Provided | 16.8 $\mu$m | 8.5 $\mu$m | 72% | A (0.95) | B (0.94) | A | A (4 mm) | A |
| Ex. 5 | gold-silver nanorod | PVA | Provided | 23.1 $\mu$m | 11.6 $\mu$m | 71% | A (0.92) | B (0.93) | A | B (5 mm) | A |
| Comp. Ex. 1 | gold-silver nanorod | PVA | Provided | 28.1 $\mu$m | 14.0 $\mu$m | 73% | B (0.89) | B (0.90) | A | B (5 mm) | A |
| Comp. Ex. 2 | gold-silver nanorod | PVA | Provided | 38.5 $\mu$m | 19.8 $\mu$m | 73% | B (0.87) | C (0.89) | A | B (6 mm) | A |
| Comp. Ex.3 | gold-silver nanorod | PVA | Provided | 50.7 $\mu$m | 25.4 $\mu$m | 70% | C (0.84) | C (0.85) | A | B (8 mm) | A |
| Comp. Ex. 4 | iodine | vinylon film | Not provided | 75.0 $\mu$m | 46.9 $\mu$m | 44% | A (0.99) | C (0.86) | C | C (10 mm) | C |
| Comp. Ex. 5 | iodine | PVA | Provided | 6.4 $\mu$m | 3.2 $\mu$m | 62% | A (0.93) | A (0.96) | C | A (2 mm) | C |
| Comp. Ex. 6 | gold-silver nanorod | PVA | Not provided | 63.1 $\mu$m | 39.4 $\mu$m | 68% | C (0.82) | C (0.85) | A | C (10 mm) | A |

Since the polarizing film of the present invention has excellent durability, excellent orientation properties and a small shrinkage stress and is capable of producing a polarizing plate with a large surface area, it can be put in practical use, for example, in projectors, liquid crystal monitors, liquid crystal television sets, and the like. Besides the above mentioned, it can be used as light isolators, optical fibers, glass for various kinds of vehicles such as automobiles, buses, auto-trucks, electric trains, super express trains, airplanes, passenger planes and vessels; and additionally used in various fields, as glass for building materials such as openings and partitions in buildings, for example, general residential houses, complex housings, office buildings, stores, community facilities and industrial plants. Among these, particularly preferably, the polarizing film is used as glass for vehicles such as windshields of automobiles, as disclosed in JP-A No. 2007-334150.

## Claims

1. A polarizing film comprising:

   dichroic anisotropic metal nanoparticles, and
   a thermoplastic resin,

   wherein the polarizing film has a thickness of 12.5 $\mu$m or less.

2. The polarizing film according to claim 1, wherein the dichroic anisotropic metal nanoparticles have a degree of orientation higher than 0.85.

3. The polarizing film according to one of claims 1 and 2, wherein the dichroic anisotropic metal nanoparticles have an equivalent-volume-sphere radius of 15 nm or less and an aspect ratio of 1.1 to 10.

4. The polarizing film according to any one of claims 1 to 3, wherein a metal used in the dichroic anisotropic metal nanoparticles comprises at least one of silver, gold, copper, aluminum, platinum, palladium, and nickel.

5. The polarizing film according to any one of claims 1 to 4, wherein the dichroic anisotropic metal nanoparticles have a core-shell structure in which a surface of a core metal is coated with a shell metal.

6. The polarizing film according to claim 5, wherein the core metal is gold, and the shell metal is silver.

7. The polarizing film according to any one of claims 1 to 6, wherein the thermoplastic resin is polyvinyl alcohol.

8. A method for producing a polarizing film, the method comprising:

   forming a composition layer containing at least dichroic anisotropic metal nanoparticles and a thermoplastic resin on a surface of a stretchable substrate, and
   stretching the composition layer together with the stretchable substrate to form a polarizing film on the surface of the stretchable substrate,

   wherein the composition layer has a thickness of 25 $\mu$m or less, and the polarizing film after being subjected to the stretching is 12.5 $\mu$m or less.

9. The method according to claim 8, wherein the composition layer has a thickness of 10 $\mu$m or less.

10. The method according to one of claims 8 and 9, wherein the stretchable substrate is unstretched polyethylene terephthalate.

11. A polarizing plate comprising:

    the polarizing film according to any one of claims 1 to 7.

12. The polarizing plate according to claim 11, wherein a base material is provided on each of a first surface of the polarizing film and a second surface thereof opposing the first surface.

13. The polarizing plate according to claim 12, wherein the base material provided on at least the first surface of the polarizing film is a triacetylcellulose film.

14. The polarizing plate according to claim 11, wherein a first base material and a second base material are provided in this order on each of first and second surfaces of the polarizing film, the second surface opposing the first surface.

15. The polarizing plate according to claim 14, wherein the first base material is an intermediate layer containing polyvinyl butyral and a polyethylene-vinyl acetate copolymer, and the second base material is a glass substrate.

16. A method for producing a polarizing plate, the method comprising:

laminating a base material on a surface of a polarizing film opposing a surface provided with a stretchable substrate, and peeling off the stretchable substrate from the surface of the polarizing film, the surface having being provided with the stretchable substrate,

wherein the polarizing film is produced by the method for producing a polarizing film, according to any one of claims 8 to 10.

17. The method according to claim 16, further comprising: further comprising:

providing a base material on the surface of the polarizing film opposing the surface having been provided with the base material, so as to form a laminate in which the base material is provided on both the surfaces of the polarizing film.

18. An antiglare vehicular film comprising:

the polarizing film according to any one of claims 1 to 7.

## FIG. 1

## FIG. 2

# FIG. 3

# FIG. 4A

B    L    L>0.9B

# FIG. 4B

B    L    L≦0.9B

# FIG. 4C

B    L    L≦0.9B

# FIG. 5A

# FIG. 5B

FIG. 5C

FIG. 5D

FIG. 5E

FIG. 5F

FIG. 5G

# FIG. 5H

# FIG. 6 A

# FIG. 6 B

# FIG. 6 C

# FIG. 6 D

# FIG. 6 E

# FIG. 6 F

150

15b
14b
16
13
16
14a

15a

# FIG. 7 A

20

27

22
23
28a

# FIG. 7 B

23
28a

# FIG. 7C

200

28b
23
28a

# FIG. 7D

250

25b
28b
23
28a
25a

# FIG. 8

300

38
36
33
36
35
39

# FIG. 9

# FIG. 10

# FIG. 11

# FIG. 12

# FIG. 13

# FIG. 14

## FIG. 15

## FIG. 16

# FIG. 17

# FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001343522 A
- JP 2003043257 A
- JP 2001343521 A
- JP 2000338329 A
- JP 8012296 B
- JP 2002228837 A
- JP 2006184624 A
- JP 2006312681 A
- JP 11295503 A
- JP 11153703 A
- JP 2000009908 A
- JP 2001310432 A
- JP 2001166104 A
- US 20030202137 A
- US 6210858 B
- JP 20022776069 A
- JP 2000047004 A
- JP 2001315242 A
- JP 2001031871 A

- JP 2001296401 A
- JP 2001293818 A
- JP 9222503 A
- JP 11038202 A
- JP 2001040284 A
- JP 2000284102 A
- JP 2004045462 A
- JP 11258403 A
- JP 58142958 A
- JP 58147483 A
- JP 58147484 A
- JP 9157582 A
- JP 11106704 A
- JP 2000117902 A
- JP 2001048590 A
- JP 2002053804 A
- JP 11003820 A
- JP 2007334150 A

**Non-patent literature cited in the description**

- *Adv. Mater.,* 2002, vol. 14 (13), 1000-1004
- *Adv Func. Mater.,* 2005, vol. 75, 1065-1071
- *Adv Mater.,* 2002, vol. 14 (13), 1000-1004
- *Adv. Func. Mater.,* 2005, vol. 75, 1065-1071
- Kagaku Binran Kaitei 3 Han kiso Hen II. Manual for Chemistry

- **Gold Nanorods.** *Langmuir,* 1999, vol. 15, 701-709
- *Chem. Commun.,* 2001, 617-618
- **Silver Nanorods.** *Chem.Comm.,* 2001, vol. 7, 617-618
- **Gold Core-Silver Shell Nanorods.** *J. Phys. Chem.B,* 2004, vol. 108, 5, 882-5888